# EUROPEAN PATENT APPLICATION

(11) **EP 4 767 809 A1**
(43) Date of publication of application: **01.07.2026**
(21) Application number: 25223908.2
(22) Date of filing: 16.12.2025
(51) Int. Cl.: A01D 34/64, A01D 34/66, A01D 34/71

(54) **REAR-DISCHARGE MOWER**

(30) Priority: 27.12.2024 US 202419002767
(71) Applicant: Kubota Corporation, Osaka-shi, Osaka 530-0011 (JP)
(72) Inventor: MCCALLISTER, Justin, Gainesville, GA, 30507 (US)
(74) Representative: Müller-Boré & Partner Patentanwälte PartG mbB

(57) **Abstract**

A rear-discharge mower (1) includes a vehicle body (2), a front wheel (4), a rear wheel (5), and a mower deck (10). The mower deck (10) includes a deck frame (13) and a first cutting blade (50b). The deck frame (13) is coupled to the vehicle body (2). The first cutting blade (50b) is coupled to the deck frame (13) rotatably about a first rotational axis (AX2). A first rear distance (L11) is defined between the first rotational axis (AX2) and the rear wheel (5) in a front-rear direction (DFB) of the rear-discharge mower (1) when viewed in an axial direction (DAX) defined along the first rotational axis (AX2). The front-rear direction (DFB) is defined perpendicularly to a rear-wheel rotational axis (AW2) when viewed in the axial direction (DAX). The first cutting blade (50b) defines a first cutting diameter (CD2) having the first rotational axis (AX2) as a rotational center. The first rear distance (L11) is greater than or equal to the first cutting diameter (CD2).

## Description

### BACKGROUND

### TECHNICAL FIELD

The present invention relates to a rear-discharge mower.

### DISCUSSION OF THE BACKGROUND

The rear-discharge mower mows grass and discharges grass clippings to the rear of a mower deck of the rear-discharge mower. However, at least one rear wheel of the rear-discharge mower is likely to be disposed close to a discharge opening of the mower deck, which narrows a space provided between the at least one rear wheel and at least one cutting blade of the mower deck. Thus, the at least one rear wheel may interfere with the discharged grass clippings.

### SUMMARY

According to the present invention, the rear-discharge mower (1) comprises a vehicle body (2), a front wheel (4), a rear wheel (5), and a mower deck (10). The front wheel (4) is coupled to the vehicle body (2) rotatably about a front-wheel rotational axis (AW1). The rear wheel (5) is coupled to the vehicle body (2) rotatably about a rear-wheel rotational axis (AW2). The mower deck (10) comprises a deck frame (13) and a first cutting blade (50b). The deck frame (13) is coupled to the vehicle body (2). The first cutting blade (50b) is coupled to the deck frame (13) rotatably about a first rotational axis (AX2). A first rear distance (L11) is defined between the first rotational axis (AX2) and the rear wheel (5) in a front-rear direction (DFB) of the rear-discharge mower (1) when viewed in the axial direction (DAX) defined along the first rotational axis (AX2). The front-rear direction (DFB) is defined perpendicularly to the rear-wheel rotational axis (AW2) when viewed in the axial direction (DAX). The first cutting blade (50b) defines the first cutting diameter (CD2) having the first rotational axis (AX2) as a rotational center. The first rear distance (L11) is greater than or equal to the first cutting diameter (CD2).

With this configuration, since the first rear distance (L11) is greater than or equal to the first cutting diameter (CD2), it is possible to ensure a relatively large space between the first cutting blade (50b) and the rear wheel (5) in the front-rear direction (DFB) compared to a case where the first rear distance (L11) is less than the first cutting diameter (CD2). This enables clippings to be efficiently discharged toward the rear of the mower deck (10).

In a preferred embodiment, the mower deck (10) comprises a second cutting blade (50a) and a third cutting blade (50c). The second cutting blade (50a) is coupled to the deck frame (13) rotatably about a second rotational axis (AX1). The third cutting blade (50c) is coupled to the deck frame (13) rotatably about a third rotational axis (AX3). The first rotational axis (AX2) is provided between the second rotational axis (AX1) and the third rotational axis (AX3) in the left-right direction (DS) of the rear-discharge mower (1). The left-right direction (DS) is defined along the rear-wheel rotational axis (AW2).

With this configuration, since the first rotational axis (AX2) is provided between the second rotational axis (AX1) and the third rotational axis (AX3) in the left-right direction (DS), it is possible to ensure the relatively large space in a laterally middle area, which enables the grass clippings to be gathered in the laterally middle area. This enables the grass clippings to be discharged more efficiently toward the rear of the mower deck (10).

Furthermore, in a preferred embodiment, a second distance (L21) is defined between the second rotational axis (AX1) and the rear-wheel rotational axis (AW2) in the front-rear direction (DFB) when viewed in the axial direction (DAX). A second additional distance (L22) is defined between the second rotational axis (AX1) and the front-wheel rotational axis (AW1) in the front-rear direction (DFB) when viewed in the axial direction (DAX) in the reference state where the front-wheel rotational axis (AW1) is parallel to the rear-wheel rotational axis (AW2). The second distance (L21) is greater than the second additional distance (L22).

With this configuration, the second distance (L21) is greater than the second additional distance (L22), it is possible to ensure a relatively large space between the second cutting blade (50a) and the rear wheel (5) in the front-rear direction (DFB) compared to a case where the second distance (L21) is less than or equal to the second additional distance (L22), which can reduce interference of the grass clippings with the rear wheel (5) after the grass clippings are discharged from the mower deck (10). This enables the grass clippings to be discharged more efficiently toward the rear of the mower deck (10).

In a preferred embodiment, the deck frame (13) includes a rear deck end (13r). An additional rear distance (L12) is defined between the rear deck end (13r) and the rear wheel (5) in the front-rear direction (DFB) when viewed in the axial direction (DAX). The additional rear distance (L12) is less than a half of the first cutting diameter (CD2).

With this configuration, it is possible to ensure the relatively large space between the first cutting blade (50b) and the rear wheel (5) in the front-rear direction (DFB) while the rear deck end (13r) of the deck frame (13) is arranged close to the rear wheel (5). Thus, it is possible to efficiently discharge the grass clippings toward the rear of the mower deck (10) while reducing the scattering of the grass clippings.

In a preferred embodiment, the mower deck (10) is movably coupled to the vehicle body (2) between a lower position (P2) and an upper position (P1). The first rear distance (L11) is greater than the first cutting diameter (CD2) in a lower-position state where the mower deck (10) is in the lower position (P2). With this configuration, it is possible to ensure the relatively large space in the lower-position state. This enables the grass clippings to be effectively discharged toward the rear of the mower deck 10. Furthermore, preferably, the first rear distance (L11) is greater than the first cutting diameter (CD2) in an upper-position state where the mower deck (10) is in the upper position (P1). With this configuration, it is possible to shorten the movement distance of the mower deck (10) between the lower position (P2) and the upper position (P1). This enables a structure of a coupling portion provided between the vehicle body (2) and the mower deck (10).

In a preferred embodiment, the mower deck (10) is movably coupled to the vehicle body (2) between a lower position (P2) and an upper position (P1). A first front distance (L13) is defined between the first rotational axis (AX2) and the front-wheel rotational axis (AW1) in the front-rear direction (DFB) when viewed in the axial direction (DAX) in a reference state where the front-wheel rotational axis (AW1) is parallel to the rear-wheel rotational axis (AW2). The first front distance (L13) is less than or equal to the first cutting diameter (CD2). With this configuration, the first cutting blade (50b) can be disposed further forward, enabling for a wider space to be ensured between the first cutting blade (50b) and the rear wheel (5). This enables the grass clippings to be discharged more efficiently to the rear of the mower deck (10). Furthermore, preferably, the first front distance (L13) is less than or equal to the first cutting diameter (CD2) in a lower-position state where the mower deck (10) is in the lower position (P2). With this configuration, the first cutting blade (50b) can be disposed further forward in the lower-position state, enabling for a wider space to be ensured between the first cutting blade (50b) and the rear wheel (5) in the lower-position state. This enables the grass clippings to be discharged more efficiently to the rear of the mower deck (10).

In a preferred embodiment, the mower deck (10) is movably coupled to the vehicle body (2) between a lower position (P2) and an upper position (P1). The front wheel (4) has the front-wheel radius (R1) defined from the front-wheel rotational axis (AW1). The deck frame (13) includes a front deck end (13f). A first minimum distance (L41) is defined between the front-wheel rotational axis (AW1) and the front deck end (13f) in the front-rear direction (DFB) when viewed in the axial direction (DAX) in a reference state where the front-wheel rotational axis (AW1) is parallel to the rear-wheel rotational axis (AW2). The first minimum distance (L41) is less than the front-wheel radius (R1). With this configuration, the first cutting blade (50b) can be disposed further forward, enabling for a wider space to be ensured between the first cutting blade (50b) and the rear wheel (5). This enables the grass clippings to be discharged more efficiently to the rear of the mower deck (10). Furthermore, preferably, the first minimum distance (L41) is less than the front-wheel radius (R1) in a lower-position state where the mower deck (10) is in the lower position (P2). With this configuration, the first cutting blade (50b) can be disposed further forward in the lower-position state, enabling for a wider space to be ensured between the first cutting blade (50b) and the rear wheel (5) in the lower-position state. This enables the grass clippings to be discharged more efficiently to the rear of the mower deck (10).

Furthermore, in a preferred embodiment, the front deck end (13f) includes a first front deck end (13f1), a second front deck end (13f2), and a third front deck end (13f3). The first front deck end (13f1) is provided between the second front deck end (13f2) and the third front deck end (13f3) in the left-right direction (DS) of the rear-discharge mower (1). The left-right direction (DS) is defined along the rear-wheel rotational axis (AW2). The first minimum distance (L41) is defined between the front-wheel rotational axis (AW1) and the first front deck end (13f1) in the front-rear direction (DFB) when viewed in the axial direction (DAX) in the reference state. A second minimum distance (L42) is defined between the front-wheel rotational axis (AW1) and the second front deck end (13f2) in the front-rear direction (DFB) when viewed in the axial direction (DAX) in the reference state. A third minimum distance (L43) is defined between the front-wheel rotational axis (AW1) and the third front deck end (13f3) in the front-rear direction (DFB) when viewed in the axial direction (DAX) in the reference state. The first minimum distance (L41) is less than the second minimum distance (L42) and the third minimum distance (L43).

With this configuration, the mower deck (10) can be disposed further forward while avoiding interference between the mower deck (10) and the front wheel (4). Thus, the first cutting blade (50b) can be disposed further forward while avoiding interference between the mower deck (10) and the front wheel 4, enabling for a wider space to be ensured between the first cutting blade (50b) and the rear wheel (5) while avoiding interference between the mower deck (10) and the front wheel (4). This enables the grass clippings to be discharged more efficiently to the rear of the mower deck (10) while avoiding interference between the mower deck (10) and the front wheel (4).

Furthermore, in a preferred embodiment, the front deck end (13f) includes a fourth front deck end (13f4) and a fifth front deck end (13f5). The fourth front deck end (13f4) extends from the first front deck end (13f1) to the second front deck end (13f2) and couples the first front deck end (13f1) and the second front deck end (13f2). The fifth front deck end (13f5) extends from the first front deck end (13f1) to the third front deck end (13f3) and couples the first front deck end (13f1) and the third front deck end (13f3). With this configuration, it is possible to ensure the strength of the front deck end (13f) while avoiding interference between the front deck end (13f) and the front wheel (4). Furthermore, preferably, the fourth front deck end (13f4) and the fifth front deck end (13f5) are inclined relative to the front-rear direction (DFB) when viewed in the axial direction (DAX). With this configuration, it is possible to ensure the strength of the front deck end (13f) while avoiding interference between the front deck end (13f) and the front wheel (4).

Furthermore, in a preferred embodiment, the deck frame (13) includes a cutting chamber (22). The first rotational axis (AX2) is provided in the cutting chamber (22) when viewed in the axial direction (DAX). The second front deck end (13f2) and the fourth front deck end (13f4) define a first recess (13g) provided outside the cutting chamber (22). The third front deck end (13f3) and the fifth front deck end (13f5) define a second recess (13h) provided outside the cutting chamber (22).

With this configuration, the first recess (13g) and the second recess (13h) enable the mower deck (10) to be disposed further forward while avoiding interference between the mower deck (10) and the front wheel (4). Thus, the first cutting blade (50b) can be disposed further forward while avoiding interference between the mower deck (10) and the front wheel (4), enabling for a wider space to be ensured between the first cutting blade (50b) and the rear wheel (5) while avoiding interference between the mower deck (10) and the front wheel (4). This enables the grass clippings to be discharged more efficiently to the rear of the mower deck (10) while avoiding interference between the mower deck (10) and the front wheel (4).

In a preferred embodiment, the deck frame (13) comprises: a cutting chamber (22) in which the first rotational axis (AX2) is provided when viewed in the axial direction (DAX); a discharge opening (23) connected to the cutting chamber (22); a top wall (12) to which the first cutting blade (50b) is rotatably coupled; a peripheral baffle (20) protruding from the top wall (12) in the axial direction (DAX), the top wall (12) and the peripheral baffle (20) defining the cutting chamber (22) and the discharge opening (23); and a first guide baffle (25b) protruding from the top wall (12) in the axial direction (DAX), the first guide baffle (25b) being provided in the cutting chamber (22) and extending linearly from the peripheral baffle (20) toward the discharge opening (23) to guide grass clippings from the first cutting blade (50b) toward the discharge opening (23).

With this configuration, the first guide baffle (25b) can facilitate the flow of the grass clippings from the first cutting blade (50b) toward the discharge opening (23). This enables the grass clippings to be discharged more efficiently to the rear of the mower deck (10).

Furthermore, in a preferred embodiment, the mower deck (10) comprises a second cutting blade (50a) and a third cutting blade (50c). The second cutting blade (50a) is coupled to the deck frame (13) rotatably about a second rotational axis (AX1). The third cutting blade (50c) is coupled to the deck frame (13) rotatably about a third rotational axis (AX3). The first rotational axis (AX2) is provided between the second rotational axis (AX1) and the third rotational axis (AX3) in a left-right direction (DS) of the rear-discharge mower (1). The left-right direction (DS) is defined along the rear-wheel rotational axis (AW2). The mower deck (10) comprises a second guide baffle (25a) protruding from the top wall (12) in the axial direction (DAX). The second guide baffle (25a) is provided in the cutting chamber (22) and extending linearly from the peripheral baffle (20) toward the discharge opening (23) to guide grass clippings from the second cutting blade (50a) toward the discharge opening (23).

With this configuration, the second guide baffle (25a) can facilitate the flow of the grass clippings from the second cutting blade (50a) toward the discharge opening (23). This enables the grass clippings to be discharged more efficiently to the rear of the mower deck (10).

Furthermore, in a preferred embodiment, the mower deck 10 comprises a first guard baffle (28a) protruding from the top wall (12) in the axial direction (DAX). The first guard baffle (28a) is provided in the cutting chamber (22) and extends from the first guide baffle (25b) toward the first rotational axis (AX2). With this configuration, the first guard baffle (28a) can keep the grass clippings from re-entering a space provided about the first rotational axis (AX2) of the first cutting blade (50b). This enables the grass clippings to be discharged more efficiently to the rear of the mower deck (10).

Furthermore, in a preferred embodiment, the mower deck (10) further comprises a first guard baffle (28a) and a second guard baffle (28b). The first guard baffle (28a) protrudes from the top wall (12) in the axial direction (DAX). The first guard baffle (28a) is provided in the cutting chamber (22) and extends from the first guide baffle (25b) toward the first rotational axis (AX2). The second guard baffle (28b) protrudes from the top wall (12) in the axial direction (DAX). The second guard baffle (28b) is provided in the cutting chamber (22) and extends from the second guide baffle (25a) toward the third rotational axis (AX3).

With this configuration, the first guard baffle (28a) can keep the grass clippings from re-entering a space provided around the first rotational axis (AX2) of the first cutting blade (50b). Furthermore, the second guard baffle (28b) can keep the grass clippings from re-entering a space provided around the second rotational axis (AX1) of the second cutting blade (50a). This enables the grass clippings to be discharged more efficiently to the rear of the mower deck (10).

In a preferred embodiment, the deck frame (13) includes a top wall (12) to which a cutting blade (50) is rotatably coupled. The deck frame (13) includes a left-side wall (13b), a right-side wall (13c), and a front-side wall (13f). The left-side wall (13b) protrudes from the top wall (12) in an axial direction (DAX) defined along a rotational axis (AX). The right-side wall (13c) protrudes from the top wall (12) in the axial direction (DAX). The right-side wall (13c) is spaced apart from the left-side wall (13b). The cutting blade (50) is provided between the left-side wall (13b) and the right-side wall (13c) in a left-right direction (DS) of the rear-discharge mower (1) when viewed in the axial direction (DAX). The front-side wall (13f) protrudes from the top wall (12) in the axial direction (DAX). The front-side wall (13f) couples the left-side wall (13b) and the right-side wall (13c) and extends between the left-side wall (13b) and the right-side wall (13c). The front-side wall (13f) comprises a first front deck end (13f1), a first front coupling portion (13d), and a second front coupling portion (13e). The first front deck end (13f1) is provided between the left-side wall (13b) and the right-side wall (13c) in the left-right direction (DS). The first front coupling portion (13d) is provided between the first front deck end (13f1) and the left-side wall (13b) in the left-right direction (DS) and couples the first front deck end (13f1) and the left-side wall (13b). The second front coupling portion (13e) is provided between the third front deck end (13f3) and the right-side wall (13c) in the left-right direction (DS) and couples the first front deck end (13f1) and the right-side wall (13c). At least one of the first front coupling portion (13d) and the second front coupling portion (13e) includes a recess (13g, 13h) configured to ensure a space between the front wheel (4) and the deck frame (13).

With this configuration, the cutting blade (50) can be disposed further forward, enabling for a wider space to be ensured between the cutting blade (50) and the rear wheel (5). This enables the grass clippings to be discharged more efficiently to the rear of the mower deck (10).

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.
FIG. 1 shows a perspective view of a rear-discharge mower in accordance with one of embodiments.
FIG. 2 shows a left side view of the rear-discharge mower (an upper-position state where the mower deck is in an upper position).
FIG. 3 shows a left side view of the rear-discharge mower (a lower-position state where the mower deck is in a lower position).
FIG. 4 shows a bottom view of the rear-discharge mower illustrated in FIG. 1.
FIG. 5 shows a top view of a mower deck of the rear-discharge mower with a top cover removed.
FIG. 6 shows an enlarged bottom view of the mower deck illustrated in FIG. 5.
FIG. 7 shows a bottom perspective view of the mower deck illustrated in FIG. 6.
FIG. 8 shows a perspective view of a cutting blade of the mower deck illustrated in FIG. 6.
FIG. 9 shows a right side view of the mower deck illustrated in FIG. 6.
FIG. 10 shows a left side view of the mower deck illustrated in FIG. 6.
FIG. 11 shows a rear view of the mower deck illustrated in FIG. 6.
FIG. 12 shows a rear view of the mower deck with at least part removed.
FIG. 13 shows a simulation result calculating clipping flows.
FIG. 14 shows a bottom view of the rear-discharge mower (the upper-position state where the mower deck is in the upper position).
FIG. 15 shows a bottom view of the rear-discharge mower (the lower-position state where the mower deck is in the lower position).
FIG. 16 shows an enlarged bottom view of the mower deck illustrated in FIG. 14.
FIG. 17 shows a bottom perspective view of the mower deck illustrated in FIG. 14.
FIG. 18 shows a perspective view of another type of a cutting blade of the mower deck illustrated in FIG. 6.
FIG. 19 shows an enlarged bottom view of the mower deck including the cutting blade illustrated in FIG. 18.

### DESCRIPTION OF THE EMBODIMENTS

### <Mower>

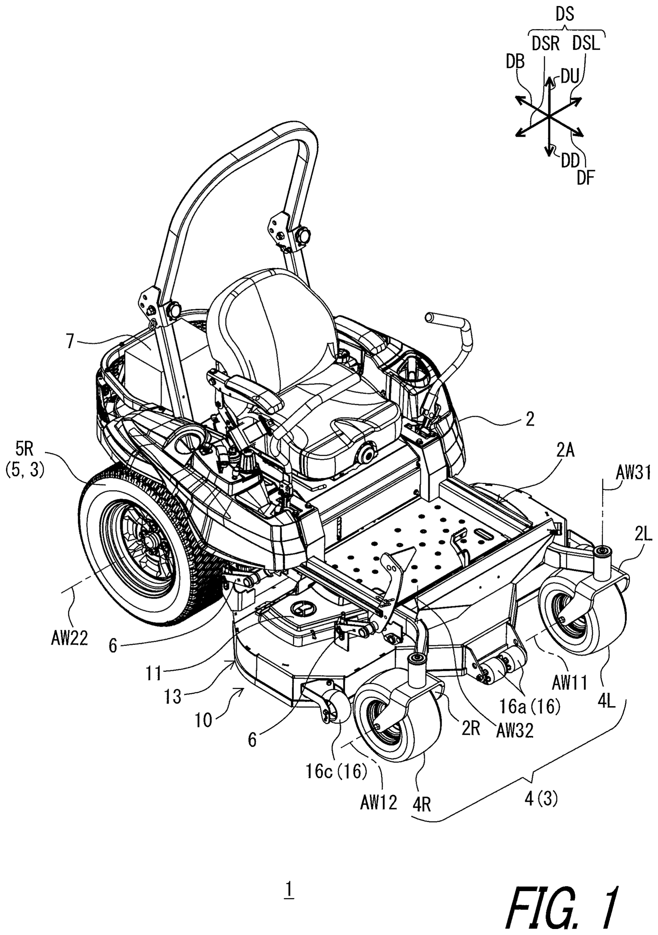

FIG. 1 shows a perspective view of a rear-discharge mower 1. The rear-discharge mower 1 can also be referred to as a mower 1. The rear-discharge mower 1 includes a vehicle body 2, wheels 3, a deck lift 6, an engine 7, and a mower deck 10. The vehicle body 2 supports the wheels 3, the deck lift 6, and the engine 7. The vehicle body 2 serves as the structural backbone of the rear-discharge mower 1, providing the necessary support and stability for the wheels 3, the deck lift 6, the engine 7, and other components of the rear-discharge mower 1. The vehicle body 2 is designed to withstand the stresses and strains of mower operation, ensuring the mower's durability and longevity. The deck lift 6 supports the mower deck 10. Accordingly, the vehicle body 2 supports the mower deck 10 via the deck lift 6.

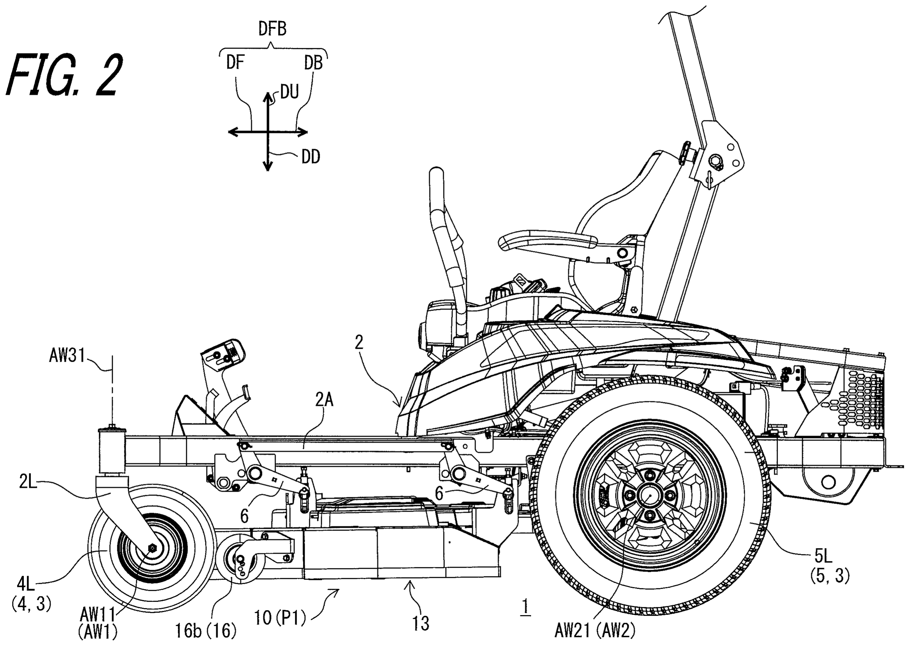

As seen in FIGS. 1 and 2, the wheels 3 are rotatably coupled to the vehicle body 2 to move the vehicle body 2. The wheels 3 include at least one front wheel 4 and at least one rear wheel 5. The front wheel 4 is coupled to the vehicle body 2 rotatably about a front-wheel rotational axis AW1. The rear wheel 5 is coupled to the vehicle body 2 rotatably about a rear-wheel rotational axis AW2. The at least one front wheel 4 includes a front wheel 4L and a front wheel 4R. The at least one rear wheel 5 includes a rear wheel 5L and a rear wheel 5R. Namely, the rear-discharge mower 1 includes the front wheel 4L or 4R and 4R and the rear wheel 5L or 5R. The rear-discharge mower 1 includes the front wheels 4L and 4R and 4R and the rear wheels 5L and 5R. The front wheel 4L can also be referred to as a front left wheel 4L. The front wheel 4R can also be referred to as a front right wheel 4R. The rear wheel 5L can also be referred to as a rear left wheel 5L. The rear wheel 5R can also be referred to as a rear right wheel 5R.

The front wheel 4L is coupled to the vehicle body 2 rotatably about a front-wheel rotational axis AW11. The front wheel 4R is coupled to the vehicle body 2 rotatably about a front-wheel rotational axis AW12. The rear wheel 5L is coupled to the vehicle body 2 rotatably about a rear-wheel rotational axis AW21. The rear wheel 5R is coupled to the vehicle body 2 rotatably about a rear-wheel rotational axis AW22.

The front wheel 4L is coupled to the vehicle body 2 rotatably about an additional front-wheel rotational axis AW31. The front wheel 4R is coupled to the vehicle body 2 rotatably about an additional front-wheel rotational axis AW32. For example, the vehicle body 2 includes a vehicle frame 2A, a wheel support 2L, and a wheel support 2R. The wheel support 2L is coupled to the vehicle frame 2A rotatably about the additional front-wheel rotational axis AW31. The wheel support 2R is coupled to the vehicle frame 2A rotatably about the additional front-wheel rotational axis AW32. The front wheel 4L is coupled to the wheel support 2L rotatably about the front-wheel rotational axis AW11. The front wheel 4R is coupled to the wheel support 2R rotatably about the front-wheel rotational axis AW12. Thus, the front-wheel rotational axis AW11 is rotatable relative to the vehicle frame 2A about the additional front-wheel rotational axis AW31. The front-wheel rotational axis AW12 is rotatable relative to the vehicle frame 2A about the additional front-wheel rotational axis AW32.

Each of the rear wheels 5L and 5R is driven by respective hydraulic motors (not shown), thereby the rear wheels 5L and 5R can rotate in the same direction or opposite directions. The rear wheels 5L and 5R are rotatably coupled to the vehicle body 2, allowing for the movement of the rear-discharge mower 1 in both a front direction DF and a rear direction DB opposite to the front direction DF when the rear wheels 5L and 5R rotate in the same direction and the same speed. In the present embodiment, a bilateral direction including the front direction DF and the rear direction DB can be referred to as a front-rear direction DFB. The rear-discharge mower 1 is configured to turn to either a leftward direction DSL or a rightward direction DSR depending on the speed and the direction in which each of the rear wheels 5L and 5R rotates. In the present embodiment, a bilateral direction including the leftward direction DSL and the rightward direction DSR can be referred to as a left-right direction DS. The rear wheels 5L and 5R are provided apart from the mower deck 10 in the rear direction DB and arranged in the left-right direction DS perpendicular to the front-rear direction DFB.

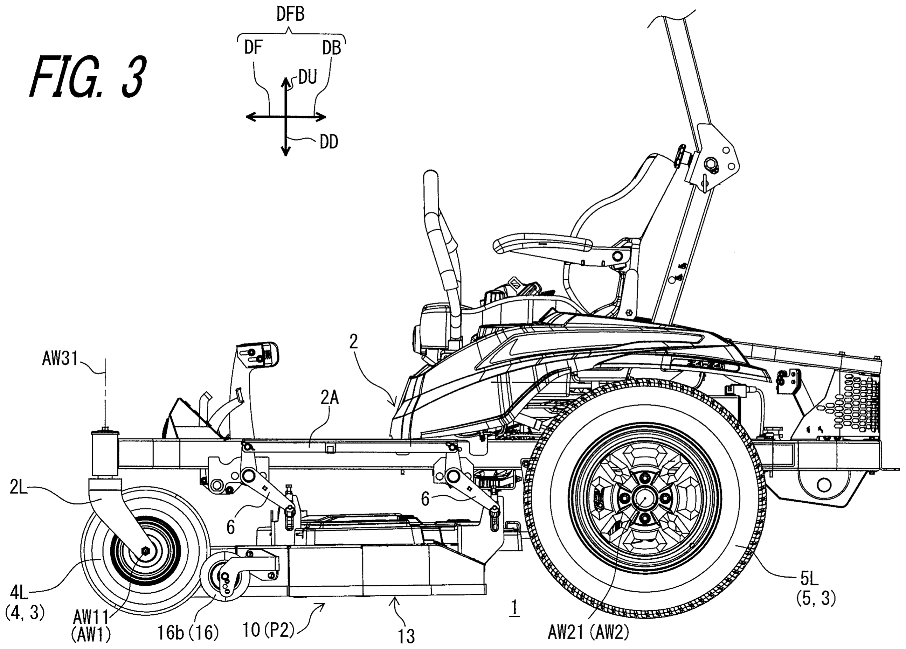

As shown in FIG. 1, the mower deck 10 includes a top cover 11 and a deck frame 13. The deck frame 13 is coupled to the vehicle body 2. The top cover 11 is attached to the deck frame 13. The top cover 11 and the deck frame 13 are configured to protect the internal components of the mower deck 10 from external elements. The engine 7 provides the necessary power for the operation of the rear-discharge mower 1. The engine 7 is also configured to drive the internal components. The internal components are explained hereinafter. The mower deck 10 includes at least two deck wheels 16. The at least two deck wheels 16 include at least two central deck wheels 16a, a left deck wheel 16b (see e.g., FIG. 2 or 3), and a right deck wheel 16c. The at least two deck wheels 16 are rotatably coupled to the deck frame 13. The at least two central deck wheels 16a, the left deck wheel 16b, and the right deck wheel 16c are rotatably coupled to the deck frame 13. The at least two deck wheels 16 provide additional support to the mower deck 10 and are configured to move the mower deck 10 in the front direction DF and the rear direction DR opposite to the front direction DF.

FIG. 2 illustrates a left side view of the rear-discharge mower 1 with the mower deck 10 positioned in an upper position P1. For example, the upper position P1 illustrated in FIG. 2 is the highest position of the mower deck 10 relative to the vehicle body 2. FIG. 3 illustrates a left side view of the rear-discharge mower 1 with the mower deck 10 positioned in a lower position P2. For example, the lower position P2 illustrated in FIG. 3 is the lowest position of the mower deck 10 relative to the vehicle body 2.

As shown in FIGS. 2 and 3, the mower deck 10 is movably coupled to the vehicle body 2 between the lower position P2 and the upper position P1. The deck lift 6, which is attached to the vehicle body 2, is configured to adjust the height of the mower deck 10 between the upper position P1 and the lower position P2. More specifically, the deck lift 6 is configured to move the mower deck 10 in the upward direction DU and in the downward direction DD. This allows for the customization of the cutting height, enabling the user to achieve a desired grass length.

Typically, the vehicle body 2 and the mower deck 10 are robust and durable, designed to withstand the rigors of mowing operations. In a different configuration, the vehicle body 2 and the mower deck 10 could be made from a variety of materials, including but not limited to metal alloys, composites, or reinforced plastics, depending on the desired strength, weight, and cost considerations. Similarly, the wheels 3 and the deck wheels 16 could be of different types, such as pneumatic tires, solid rubber tires, or plastic wheels, each offering different levels of traction, durability, and ride comfort. The deck lift 6 could utilize various mechanisms for height adjustment, including hydraulic, mechanical, or electric systems. The mower deck 10 could also be designed in various shapes and sizes to accommodate different types and numbers of cutting blades 50, and to suit different mowing requirements.

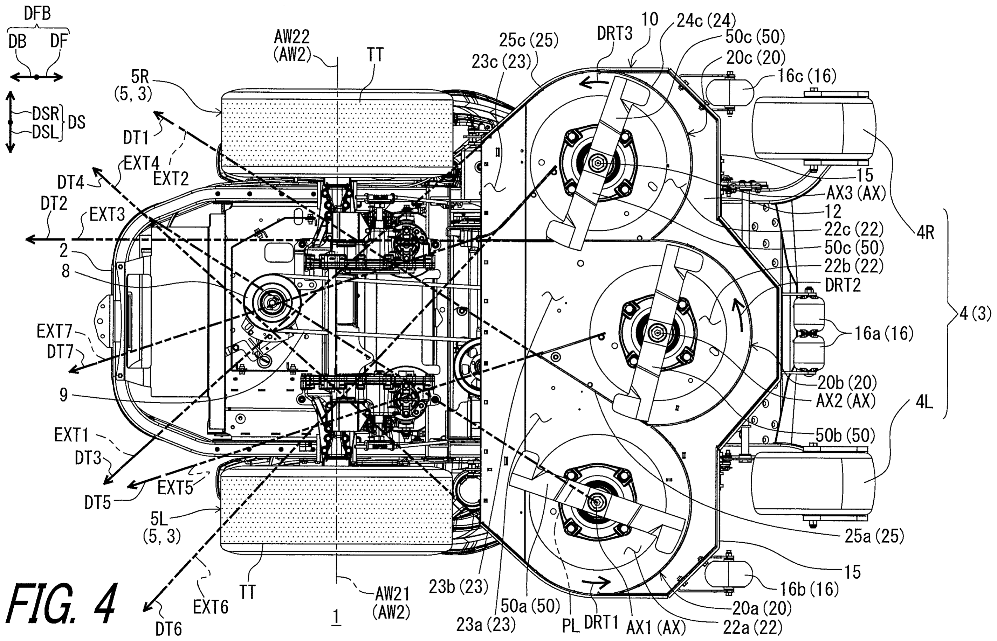

FIG. 4 presents the bottom view of the rear-discharge mower 1, showcasing the unique arrangement of cutting blades 50 and the configuration of a peripheral baffle 20. The cutting blade 50 is configured to rotate about a rotational axis AX in a rotational direction DRT to clip grass. The cutting blades 50 include a second cutting blade 50a, a first cutting blade 50b, and a third cutting blade 50c. Namely, the mower deck 10 includes the first cutting blade 50b, the second cutting blade 50a, and the third cutting blade 50c. Each of the first cutting blade 50b, the second cutting blade 50a, and the third cutting blade 50c can be collectively referred to as the cutting blade 50.

The first cutting blade 50b is coupled to the deck frame 13 rotatably about the first rotational axis AX2. The second cutting blade 50a is coupled to the deck frame 13 rotatably about the second rotational axis AX1. The third cutting blade 50c is coupled to the deck frame 13 rotatably about the third rotational axis AX3. The first rotational axis AX2 is provided between the second rotational axis AX1 and the third rotational axis AX3 in the left-right direction DS of the rear-discharge mower 1. The left-right direction DS is defined along the rear-wheel rotational axis AW21 or AW22. Each of the first rotational axis AX2, the second rotational axis AX1, and the third rotational axis AX3 can be collectively referred to as a rotational axis AX.

The first cutting blade 50b is rotatable in a first rotational direction DRT2 about the first rotational axis AX2. The second cutting blade 50a is rotatable in a second rotational direction DRT1 about the second rotational axis AX1. The third cutting blade 50c is rotatable in a third rotational direction DRT3 about the third rotational axis AX3. Each of the first rotational direction DRT2, the second rotational direction DRT1, and the third rotational direction DRT3 can be collectively referred to as the rotational direction DRT. In the present embodiment, the first rotational axis AX2, the second rotational axis AX1, and the third rotational axis AX3 are parallel to each other. Alternatively, at least one of the first rotational axis AX2, the second rotational axis AX1, and the third rotational axis AX3 can be non-parallel to another of the first rotational axis AX2, the second rotational axis AX1, and the third rotational axis AX3.

The deck frame 13 comprises a top wall 12 to which the cutting blade 50 is rotatably coupled. Namely, the deck frame 13 includes the top wall 12 to which at least one of the first cutting blade 50b, the second cutting blade 50a, and the third cutting blade 50c is rotatably coupled. The first cutting blade 50b is coupled to the top wall 12 rotatably about the first rotational axis AX2. The second cutting blade 50a is coupled to the top wall 12 rotatably about the second rotational axis AX1. The third cutting blade 50c is coupled to the top wall 12 rotatably about the third rotational axis AX3.

The deck frame 13 includes a cutting chamber 22 in which the first rotational axis AX2 is provided when viewed in an axial direction DAX. The first rotational axis AX2 is provided in the cutting chamber 22 when viewed in the axial direction DAX. The axial direction DAX is defined along the first rotational axis AX2. The second rotational axis AX1 is provided in the cutting chamber 22 when viewed in the axial direction DAX. The third rotational axis AX3 is provided in the cutting chamber 22 when viewed in the axial direction DAX.

The deck frame 13 includes a discharge opening 23 connected to the cutting chamber 22. The deck frame 13 includes the peripheral baffle 20 protruding from the top wall 12 in the axial direction DAX. The top wall 12 and the peripheral baffle 20 define the cutting chamber 22 and the discharge opening 23. Grass clippings, which have been clipped by the cutting blades 50, flow in the cutting chamber 22 and are discharged through the discharge opening 23 toward the rear of the mower deck 10.

In the present embodiment, the discharge opening 23 is provided apart from the cutting blade 50 in the rear direction DB. The cutting chamber 22 is defined by the top wall 12 and the peripheral baffle 20. More specifically, the peripheral baffle 20 includes a first peripheral baffle 20b, a second peripheral baffle 20a, and a third peripheral baffle 20c. The cutting chamber 22 includes a first cutting chamber 22b, a second cutting chamber 22a, and a third cutting chamber 22c. The first cutting chamber 22b is at least partially defined by the first peripheral baffle 20b. The second cutting chamber 22a is at least partially defined by the second peripheral baffle 20a. The third cutting chamber 22c is at least partially defined by the third peripheral baffle 20c. The first rotational axis AX2 is provided in the first cutting chamber 22b when viewed in the axial direction DAX. The second rotational axis AX1 is provided in the second cutting chamber 22a when viewed in the axial direction DAX. The third rotational axis AX3 is provided in the third cutting chamber 22c when viewed in the axial direction DAX. The first cutting chamber 22b is provided between the second cutting chamber 22a and the third cutting chamber 22c in the left-right direction DS. The second cutting chamber 22a is in front of one of the rear wheels 5L and 5R. The third cutting chamber 22c is in front of another of the rear wheels 5L and 5R.

### <Drive Train>

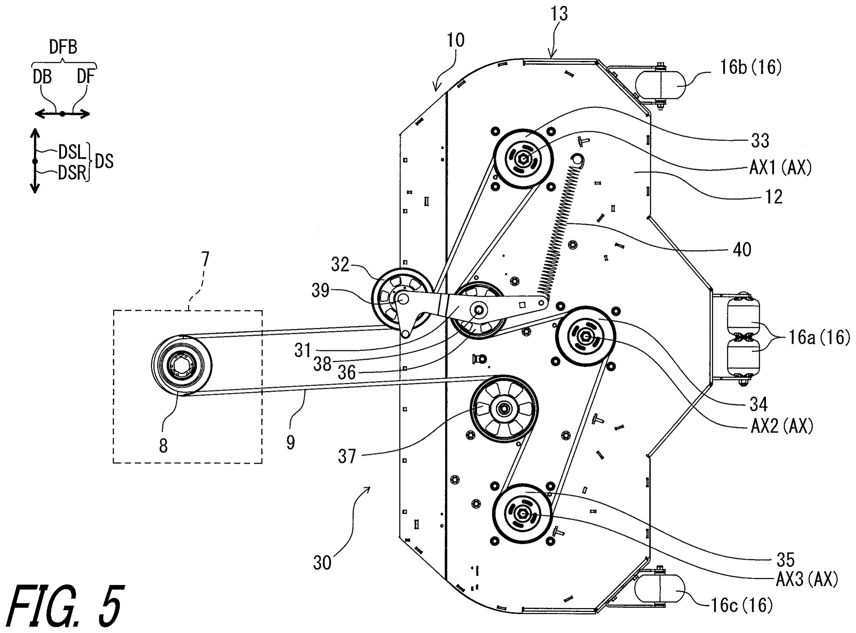

FIG. 5 shows a top view of the mower deck 10 with the top cover 11 removed. As shown in FIG. 5, the rear-discharge mower 1 includes a drive train 30 configured to rotate the cutting blades 50. The drive train 30 includes a drive pulley 8, a drive belt 9, an idler arm 31, an idler pulley 32, multiple driven pulleys 33, 34, and 35, tensioning pulleys 36 and 37, a pivot 38, an axle 39, and a tension spring 40.

The drive pulley 8 is configured to receive the primary power for the drive train 30 from the engine 7. The drive pulley 8 is typically connected to the engine 7 and is configured to be rotated by the engine 7 to drive the drive belt 9. Structures such as a clutch mechanism to connect or disconnect the drive pulley 8 to or from the engine 7 may be provided between the engine 7 and the drive pulley 8.

The drive belt 9 has a continuous loop and is configured to transmit power from the drive pulley 8 to the driven pulleys 33, 34, and 35. More specifically, the drive belt 9 loops around the drive pulley 8, the idler pulley 32, and the driven pulleys 33, 34, and 35. The drive belt 9 is typically made of reinforced rubber or synthetic materials designed for high flexibility and durability. The drive belt 9 may have a V-shaped or multi-ribbed profile to increase grip on the pulleys. Some advanced designs may incorporate embedded fibers or sensors to monitor belt wear and tension.

The driven pulley 34 is coupled to a spindle of the first cutting blade 50b to transmit rotational power from the driven pulley 34 to the first cutting blade 50b. The driven pulley 33 is coupled to a spindle of the second cutting blade 50a to transmit rotational power from the driven pulley 33 to the second cutting blade 50a. The driven pulley 35 is coupled to a spindle of the third cutting blade 50c to transmit rotational power from the driven pulley 35 to the third cutting blade 50c. The spindles may include bearings and seals to ensure smooth operation and prevent contamination. In the present embodiment, the number of driven pulleys 33, 34, and 35 are three. However, the drive train 30 may have at least one driven pulley. In some embodiments, the driven pulleys 33, 34, and 35 may have different diameters to achieve varying blade speeds across the mower deck. The tensioning pulleys 36 and 37 are engaged with the drive belt 9 to ensure efficient power transfer and prevent belt slippage.

The idler pulley 32 is mounted on the idler arm 31 to be rotatable about the axle 39. The idler pulley 32 is configured to be engaged by the drive belt 9 to provide tension. The tension spring 40 is configured to pull the idler arm 31 to rotate the idler arm 31 about the pivot 38 to move the idler pulley 32 such that the idler pulley 32 provides a proper tension. Each of the drive pulley 8, the idler pulley 32, the driven pulleys 33, 34, and 35, and the tensioning pulleys 36 and 37 are typically made of durable materials such as steel or high-strength plastics and incorporates sealed bearings for smooth operation. Each of the drive pulley 8, the idler pulley 32, the driven pulleys 33, 34, and 35, and the tensioning pulleys 36 and 37 may have a flat or grooved surface depending on the belt design and tension requirements.

In operation, power is transmitted from the engine 7 to the drive pulley 8, which rotates the drive belt 9. The drive belt 9 then transmits this rotational power to the driven pulleys 33, 34, and 35 which in turn rotate the cutting blades 50. The tensioning pulleys 36 and 37 and the idler arm 31, the idler pulley 32, and the tension spring 40 work together to maintain proper belt tension throughout the system, ensuring efficient power transfer and prolonging belt life. However, the drive train 30 may have a structure different from the illustrated structure.

### <Specific structure of the peripheral baffles>

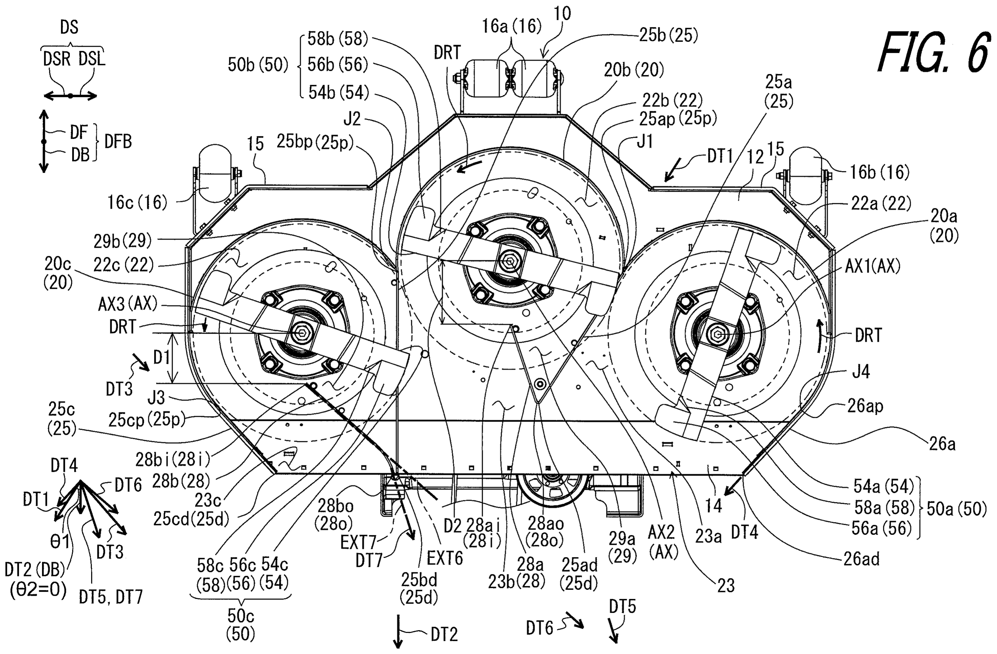

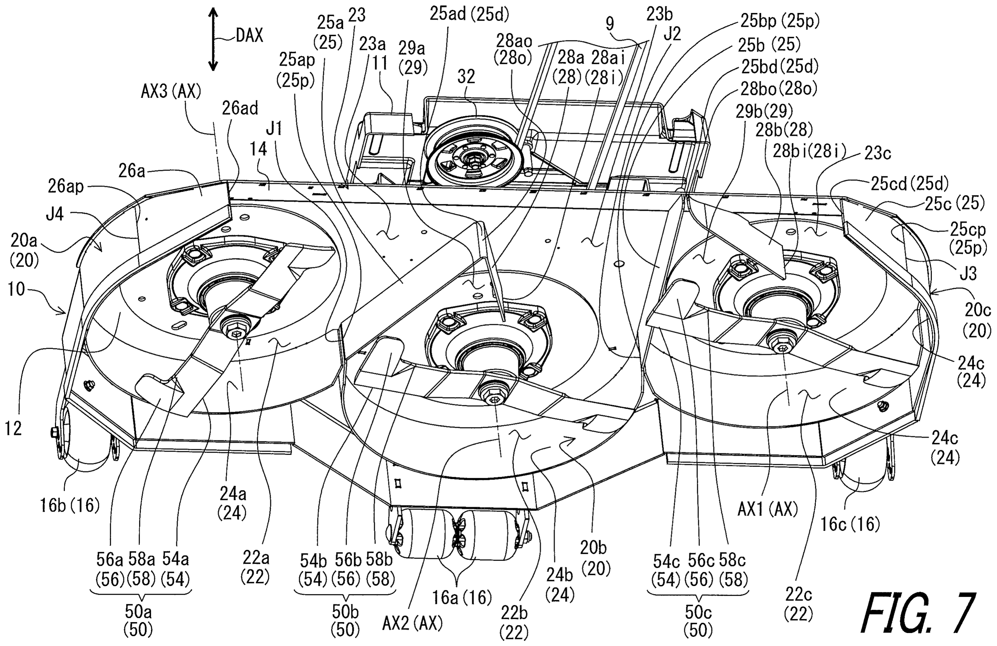

FIG. 6 illustrates an enlarged bottom view of the mower deck 10. FIG. 7 illustrates a bottom perspective view of the mower deck 10. As seen in FIGS. 6 and 7, the peripheral baffle 20 protrudes from the top wall 12 in the axial direction DAX. More specifically, the first peripheral baffle 20b, the second peripheral baffle 20a, and the third peripheral baffle 20c protrude from the top wall 12 in the axial direction DAX. As seen in FIGS. 4, 6, and 7, the first peripheral baffle 20b has an arc shape and extends circumferentially about the first rotational axis AX2. The second peripheral baffle 20a has an arc shape and extends circumferentially about the second rotational axis AX1. The third peripheral baffle 20c has an arc shape and extends circumferentially about the third rotational axis AX3. The first peripheral baffle 20b is provided between the second peripheral baffle 20a and the third peripheral baffle 20c and is coupled to the second peripheral baffle 20a and the third peripheral baffle 20c. The peripheral baffle 20 includes a first additional peripheral baffle 26a and a second additional peripheral baffle 25c. The first additional peripheral baffle 26a is coupled to the second peripheral baffle 20a and extends linearly from the second peripheral baffle 20a when viewed in the axial direction DAX. The second additional peripheral baffle 25c is coupled to the third peripheral baffle 20c and extends linearly from the third peripheral baffle 20c when viewed in the axial direction DAX. The first additional peripheral baffle 26a is configured to guide the grass clippings toward the discharge opening 23. The second additional peripheral baffle 25c is configured to guide the grass clippings toward the discharge opening 23. The first additional peripheral baffle 26a, the second additional peripheral baffle 25c, and the top wall 12 define the discharge opening 23. The discharge opening 23 is defined between the first additional peripheral baffle 26a and the second additional peripheral baffle 25c.

The deck frame 13 includes a first guide baffle 25b and a second guide baffle 25a. The first guide baffle 25b protrudes from the top wall 12 in the axial direction DAX. The first guide baffle 25b is provided in the cutting chamber 22 and extends linearly from the peripheral baffle 20 toward the discharge opening 23 to guide the grass clippings from the first cutting blade 50b toward the discharge opening 23. The second guide baffle 25a protrudes from the top wall 12 in the axial direction DAX. The second guide baffle 25a is provided in the cutting chamber 22 and extends linearly from the peripheral baffle 20 toward the discharge opening 23 to guide the grass clippings from the second cutting blade 50a toward the discharge opening 23. The first guide baffle 25b can also be referred to as a guide baffle 25b. The second guide baffle 25a can also be referred to as a guide baffle 25a.

The first cutting chamber 22b is defined by the first peripheral baffle 20b, the first guide baffle 25b, and the second guide baffle 25a. The second cutting chamber 22a is defined by the second peripheral baffle 20a, the first additional peripheral baffle 26a, and the second guide baffle 25a. The third cutting chamber 22c is defined by the third peripheral baffle 20c, the first guide baffle 25b, and the second additional peripheral baffle 25c.

The first peripheral baffle 20b is coupled to the third peripheral baffle 20c at a first junction J2. The first guide baffle 25b is coupled to the first junction J2 and extends from the first junction J2 toward the discharge opening 23. The first guide baffle 25b is at least partially provided between the first rotational axis AX2 and the third rotational axis AX3 in the left-right direction DS.

The first peripheral baffle 20b is coupled to the second peripheral baffle 20a at a second junction J1. The second guide baffle 25a is coupled to the second junction J1 and extends from the second junction J1 toward the discharge opening 23. The second guide baffle 25a is at least partially provided between the first rotational axis AX2 and the second rotational axis AX1 in the left-right direction DS.

As shown in FIGS. 4 and 6, the second guide baffle 25a has a linear shape when viewed in the axial direction DAX and projects in a second tangential direction DT1 from the second junction J1. The second guide baffle 25a has a proximal end 25ap and a distal end 25ad. The proximal end 25ap is coupled to the second peripheral baffle 20a. The distal end 25ad is opposite to the proximal end 25ap. The second guide baffle 25a extends from the proximal end 25ap to the distal end 25ad. A tangential direction of the second peripheral baffle 20a at the second junction J1 is substantially identical to the second tangential direction DT1. As seen in FIG. 4, an extended line EXT2 of the second guide baffle 25a which extends in the second tangential direction DT1 reaches the rear wheel 5R in the rear of the rear-wheel rotational axis AW21 or AW22.

The second peripheral baffle 20a is connected to the first additional peripheral baffle 26a at a fourth junction J4. The first additional peripheral baffle 26a has a linear shape when viewed in the axial direction DAX and projects in a fourth tangential direction DT4 from the fourth junction J4. The first additional peripheral baffle 26a has an additional proximal end 26ap and an additional distal end 26ad. The additional proximal end 26ap is coupled to the second peripheral baffle 20a. The additional distal end 26ad is opposite to the additional proximal end 26ap. The distal end 25ad of the first guide baffle 25b and the additional distal end 26ad of the first additional peripheral baffle 26a define a first discharge opening 23b. A tangential direction of the second peripheral baffle 20a at the fourth junction J4 is substantially identical to the fourth tangential direction DT4. The second tangential direction DT1 is inclined from the fourth tangential direction DT4 in the second rotational direction DRT1. As seen in FIG. 4, an extended line EXT4 of the first additional peripheral baffle 26a which extends in the fourth tangential direction DT4 grazes the rear wheel 5L and extends toward the rear of the rear wheel 5R.

The first peripheral baffle 20b is connected to the first guide baffle 25b such that the first peripheral baffle 20b and the first guide baffle 25b are arranged in this order along the first rotational direction DRT2 about the first rotational axis AX2. The second guide baffle 25a is connected to the first peripheral baffle 20b such that the second guide baffle 25a and the first peripheral baffle 20b are arranged in this order along the first rotational direction DRT2 about the first rotational axis AX2.

The first peripheral baffle 20b is connected to the first guide baffle 25b at the first junction J2. The first guide baffle 25b has a linear shape when viewed in the axial direction DAX and projects in a first tangential direction DT2 at the first junction J2. The first guide baffle 25b has a proximal end 25bp and a distal end 25bd. The proximal end 25bp is connected to the first peripheral baffle 20b. The distal end 25bd is opposite to the proximal end 25bp. A tangential direction of the first peripheral baffle 20b at the first junction J2 is substantially identical to the first tangential direction DT2. The first tangential direction DT2 is inclined from the second tangential direction DT1 in the first rotational direction DRT2. A first angle θ1 made by the second tangential direction DT1 and the rear direction DB is larger than a second angle θ2 made by the first tangential direction DT2 and the rear direction DB. More specifically, the first tangential direction DT2 is substantially identical to the rear direction DB. As seen in FIG. 4, an extended line EXT3 of the first guide baffle 25b which extends in the first tangential direction DT2 passes between the rear wheels 5L and 5R.

The third peripheral baffle 20c is connected to the first guide baffle 25b such that the first guide baffle 25b and the third peripheral baffle 20c are arranged in order along the third rotational direction DRT3 about the third rotational axis AX3. The second additional peripheral baffle 25c is connected to the third peripheral baffle 20c opposite to the first guide baffle 25b such that the third peripheral baffle 20c and the second additional peripheral baffle 25c are arranged in order along the third rotational direction DRT3 about the third rotational axis AX3.

The third peripheral baffle 20c is connected to the second additional peripheral baffle 25c at a third junction J3. The second additional peripheral baffle 25c has a linear shape when viewed in the axial direction DAX and projects in a third tangential direction DT3 from the third junction J3. The second additional peripheral baffle 25c has a proximal end 25cp connected to the third peripheral baffle 20c and a distal end 25cd opposite to the proximal end 25cp. A tangential direction of the third peripheral baffle 20c at the third junction J3 is substantially identical to the third tangential direction DT3. The third tangential direction DT3 is inclined from the first tangential direction DT2 in the third rotational direction DRT3. An angle made by the third tangential direction DT3 and the rear direction DB is larger than the second angle θ2. As seen in FIG. 4, an extended line EXT1 of the second additional peripheral baffle 25c which extends in the third tangential direction DT3 is provided in front of a tire tread TT of the rear wheel 5R in the front-rear direction DFB. The rear wheel 5R is a rear wheel 5 apart from the third cutting blade 50c in the rear direction DB. The extended line EXT1 passes between the rear wheels 5L and 5R.

The first guide baffle 25b, the second guide baffle 25a, and the second additional peripheral baffle 25c can be collectively referred to as a guide baffle 25. The proximal end 25bp of the first guide baffle 25b, the proximal end 25ap of the second guide baffle 25a, and the proximal end 25cp of the second additional peripheral baffle 25c can be collectively referred to as a proximal end 25p of the guide baffle 25. The distal end 25ad of the first guide baffle 25b, the distal end 25bd of the second guide baffle 25a, and the distal end 25cd of the second additional peripheral baffle 25c can be collectively referred to as the distal end 25d of the guide baffle 25.

### <Guard baffle>

As shown in FIGS. 6 and 7, the mower deck 10 includes a first guard baffle 28a and a second guard baffle 28b. The first guard baffle 28a protrudes from the top wall 12 in the axial direction DAX. The first guard baffle 28a is provided in the cutting chamber 22 and extends from the first guide baffle 25b toward the first rotational axis AX2. The second guard baffle 28b protrudes from the top wall 12 in the axial direction DAX. The second guard baffle 28b is provided in the cutting chamber 22 and extends from the second guide baffle 25a toward the third rotational axis AX3.

The first guard baffle 28a is spaced apart from the first guide baffle 25b to define, between the first guard baffle 28a and the first guide baffle 25b, a passage through which grass clippings are to pass. The second guard baffle 28b is spaced apart from the second additional peripheral baffle 25c to define, between the first guard baffle 28a and the first guide baffle 25b, a passage through which grass clippings are to pass.

A first discharge opening 23b is defined between the first guard baffle 28a and the first guide baffle 25b. The first cutting chamber 22b is connected to the first discharge opening 23b through which the grass clippings are to pass.

A second discharge opening 23a is defined between the second guide baffle 25a and the first additional peripheral baffle 26a. The second cutting chamber 22a is connected to the second discharge opening 23a through which the grass clippings are to pass.

A third discharge opening 23c is defined between the first guide baffle 25b and the second additional peripheral baffle 25c. The third cutting chamber 22c is connected to the third discharge opening 23c through which the grass clippings are to pass.

The mower deck 10 does not include a guard baffle in the second cutting chamber 22a. The reasons why the mower deck 10 does not include a guard baffle in the second cutting chamber 22a is explained below.

The guard baffle 28 is provided to keep the grass clippings from re-entering a cutting area 29 in which the grass is usually cut by the cutting blade 50. More specifically, the first guard baffle 28a is provided to keep the grass clippings from re-entering a first cutting area 29a in which the grass is usually cut by the first cutting blade 50b. The second guard baffle 28b is provided to keep the grass clippings from re-entering a second cutting area 29b in which the grass is usually cut by the first cutting blade 50b.

The guard baffle 28 is provided opposite to the guide baffle 25 to guide the grass clippings toward the discharge opening 23. The guard baffle 28 extends from an outer baffle end 28o to an inner baffle end 28i. The outer baffle end 28o is provided at the discharge opening 23. More specifically, the outer baffle end 28o adjoins the distal end 25d of the guide baffle 25. The closer to the rotational axis AX (the blade spindle of the cutting blade 50) the inner baffle end 28i is, the more effectively the clippings are kept from re-entering the cutting area 29. That is, the guard baffle 28 extends from the vicinity of the distal end 25d of the guide baffle 25 toward the rotational axis AX. The guard baffle 28 is provided such that the cutting area 29 is provided opposite to the discharge opening 23 with respect to the guard baffle 28.

More specially, the first guard baffle 28a is provided opposite to the first guide baffle 25b to guide the grass clippings toward the first discharge opening 23b. The first guard baffle 28a extends from a first outer baffle end 28ao to a first inner baffle end 28ai. The first outer baffle end 28ao is provided at the first discharge opening 23b. More specifically, the first outer baffle end 28ao adjoins the distal end 25bd of the first guide baffle 25b. In the present embodiment, the first outer baffle end 28ao is connected to the distal end 25bd of the first guide baffle 25b. Alternatively, the first outer baffle end 28ao may be spaced apart from the distal end 25bd of the first guide baffle 25b.

The closer to the first rotational axis AX2 (the blade spindle of the first cutting blade 50b) the first inner baffle end 28ai is, the more effectively the clippings are kept from re-entering the first cutting area 29a. That is, the first guard baffle 28a extends from the vicinity of the distal end 25ad of the second guide baffle 25a toward the first rotational axis AX2. The first guard baffle 28a is provided such that the first cutting area 29a is provided opposite to the first discharge opening 23b with respect to the first guard baffle 28a.

More specially, the second guard baffle 28b is provided opposite to the second additional peripheral baffle 25c to guide the grass clippings toward the third discharge opening 23c. The second guard baffle 28b extends from a second outer baffle end 28bo to a second inner baffle end 28bi. The second outer baffle end 28bo is provided at the third discharge opening 23c. More specifically, the second outer baffle end 28bo adjoins the distal end 25ad of the second guide baffle 25a. In the present embodiment, the second outer baffle end 28bo is spaced apart from the distal end 25ad of the second guide baffle 25a. Alternatively, the second outer baffle end 28bo can be connected to the distal end 25ad of the second guide baffle 25a.

The closer to the third rotational axis AX3 (the blade spindle of the third cutting blade 50c) the second inner baffle end 28bi is, the more effectively the clippings are kept from re-entering the second cutting area 29b. That is, the second guard baffle 28b extends from the vicinity of the distal end 25ad of the second guide baffle 25a toward the third rotational axis AX3. The second guard baffle 28b is provided such that the second cutting area 29b is provided opposite to the third discharge opening 23c with respect to the second guard baffle 28b.

In order to explain how close to the rotational axis AX the inner baffle end 28i is preferably, the structure of the cutting blade 50 is explained. The cutting blade 50 can be made from different materials, such as steel, aluminum, or plastic. The choice of material can affect the durability and performance of the cutting blade 50. For instance, a steel blade can be more durable but heavier, while a plastic blade can be lighter but less durable. The choice of material can also affect the cost of the cutting blade 50, and can be chosen according to the specific budget of the user.

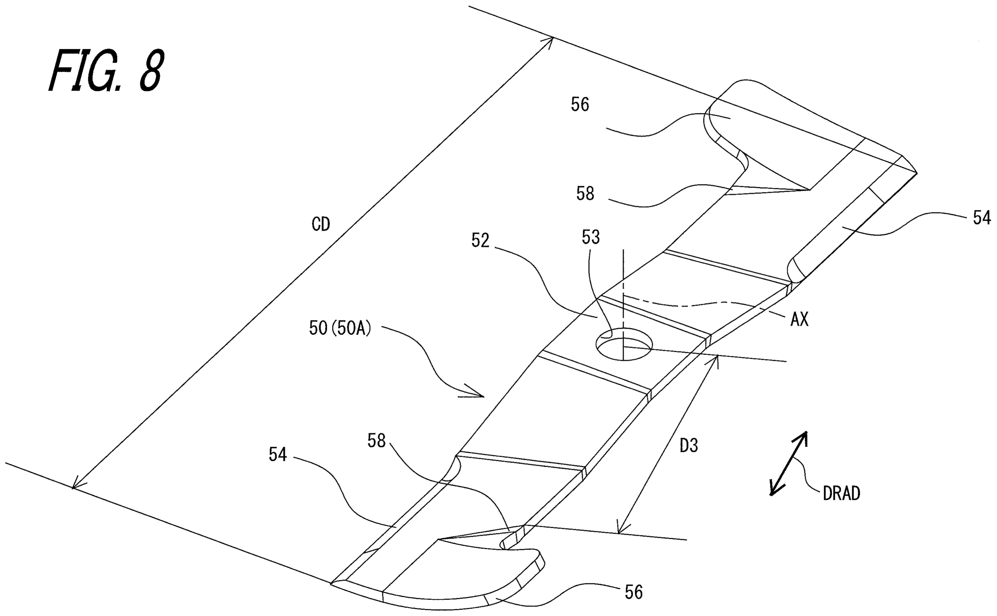

FIG. 8 shows a perspective view of one type (50A) of the cutting blade 50. This type 50A of the cutting blades 50 are also shown in FIGS. 4, 6, and 7. As shown in FIG. 8, the cutting blade 50 includes a central portion 52, cutting edges 54, and lifts 56. The central portion 52 has a through hole 53 through which a blade spindle of the cutting blade 50 passes. The blade spindle is connected to any of the driven pulleys 33, 34, and 35. The cutting edges 54 serve a function to cut the grass. The lifts 56 serve to direct the grass upward for effectively cutting the grass. The cutting blade 50 has a cutting diameter CD which is a length between a tip end of the one of the cutting edges 54 and a tip end of another of the cutting edges 54. The tip end of each of the cutting edges 54 means a furthest point of each of the cutting edges 54 from the rotational axis AX. The cutting blade 50 has a distance D3 the rotational axis AX and an inner end 58 of a lift 56 of the cutting blade 50 in a radial direction DRAD with respect to the rotational axis AX.

In FIG. 6, a two-dot chain line about the first rotational axis AX2 shows a circular trajectory along which the tip ends of the cutting edges 54 of the first cutting blade 50b pass. A first cutting diameter CD2 of the first cutting blade 50b is a diameter of a circle indicated with the two-dot chain line about the first rotational axis AX2. A two-dot chain line about the second rotational axis AX1 shows a circular trajectory along which the tip ends of the cutting edges 54 of the second cutting blade 50a pass. A second cutting diameter CD1 of the second cutting blade 50a is a diameter of a circle indicated with the two-dot chain line about the second rotational axis AX1. A two-dot chain line about the third rotational axis AX3 shows a circular trajectory along which the tip ends of the cutting edges 54 of the third cutting blade 50c pass. A third cutting diameter CD3 of the third cutting blade 50c is a diameter of a circle indicated with the two-dot chain line about the third rotational axis AX3.

A dotted line about the second rotational axis AX1 shows a circular trajectory along which the inner ends 58 of the lifts 56 of the second cutting blade 50a pass. A dotted line about the first rotational axis AX2 shows a circular trajectory along which the inner ends 58 of the lifts 56 of the first cutting blade 50b pass. A dotted line about the third rotational axis AX3 shows a circular trajectory along which the inner ends 58 of the lifts 56 of the third cutting blade 50c pass. Accordingly, a radius of the circular trajectory shown in the dotted line is the distance D3.

As shown in FIG. 6, the inner baffle end 28i is spaced apart from the rotational axis AX in the rear direction DB, and a distance defined between the rotational axis AX and the inner baffle end 28i is shorter than a half of the cutting diameter CD of the cutting blade 50 when viewed in the axial direction DAX. More specifically, the first inner baffle end 28ai is spaced apart from the first rotational axis AX2 in the rear direction DB, and a distance D2 defined between the first rotational axis AX2 and the first inner baffle end 28ai when viewed in along the first rotational axis is shorter than a half of the cutting diameter CD of the first cutting blade 50b when viewed in the axial direction DAX. The second inner baffle end 28bi is spaced apart from the third rotational axis AX3 in the rear direction DB, and a distance D1 defined between the third rotational axis AX3 and the second inner baffle end 28bi when viewed in the axial direction DAX is shorter than a half of the cutting diameter CD of the third cutting blade 50c when viewed in the axial direction DAX.

Preferably, when viewed in the axial direction DAX, the distance defined between the rotational axis AX and the inner baffle end 28i is shorter than the distance D3 between the rotational axis AX and the inner end 58 of the lift 56 of the cutting blade 50 in the radial direction DRAD with respect to the rotational axis AX. More specifically, the distance D2 defined between the first rotational axis AX2 and the first inner baffle end 28ai is shorter than the distance D3 between the first rotational axis AX2 and the inner end 58 of the lift 56 of the first cutting blade 50b in the radial direction DRAD with respect to the first rotational axis AX2. The distance D1 defined between the third rotational axis AX3 and the second inner baffle end 28bi is shorter than the distance D3 defined between the third rotational axis AX3 and the inner end 58 of the lift 56 of the third cutting blade 50c in the radial direction DRAD with respect to the third rotational axis AX3.

Furthermore, in the first guard baffle 28a, the first outer baffle end 28ao is connected to the distal end 25bd of the first guide baffle 25b. That is, the first outer baffle end 28ao (the outer baffle end 28o) is identical to the distal end 25ad of the first guide baffle 25b (the distal end 25d of the guide baffle 25). Accordingly, for example, the first guard baffle 28a, the first guide baffle 25b, and the first guide baffle 25b are formed by bending a single baffle plate.

Furthermore, the first guard baffle 28a has a linear shape when viewed in the axial direction DAX and projects in a fifth tangential direction DT5. The fifth tangential direction DT5 is a direction from the first inner baffle end 28ai to the first outer baffle end 28ao. As seen in FIG. 4, an extended line EXT5 extending from the first guard baffle 28a in the fifth tangential direction DT5, which is a direction from the first inner baffle end 28ai to the first outer baffle end 28ao, is provided between the rear wheels 5L and 5R in the left-right direction DS such that the extended line EXT5 does not cross any of the rear wheels 5L and 5R. The fifth tangential direction DT5 is inclined from the first tangential direction DT2 in the rotational direction DRT.

As shown in FIG. 6, the second inner baffle end 28bi is apart from the third rotational axis AX3 in the rear direction DB. The second guard baffle 28b bends between the second inner baffle end 28bi and the second outer baffle end 28bo. The second guard baffle 28b projects in a sixth tangential direction DT6 at the second inner baffle end 28bi. The sixth tangential direction DT6 is inclined from the third tangential direction DT3 in the rotational direction DRT. The second guard baffle 28b projects in a seventh tangential direction DT7 at the second outer baffle end 28bo. The third tangential direction DT3 is inclined from the seventh tangential direction DT7 in the rotational direction DRT.

As seen in FIG. 4, an extended line EXT6 of the second guard baffle 28b at the second inner baffle end 28bi, which extends in the sixth tangential direction DT6, reaches the rear wheel 5L in the rear of the rear-wheel rotational axis AW2. An extended line EXT7 of the second guard baffle 28b at the second outer baffle end 28bo, which extends in the seventh tangential direction DT7, passes between the rear wheels 5L and 5R. This structure reduces an amount of the grass clippings which are discharged from the third discharge opening 23c to reach the rear wheel 5L.

### <Other features of mower deck>

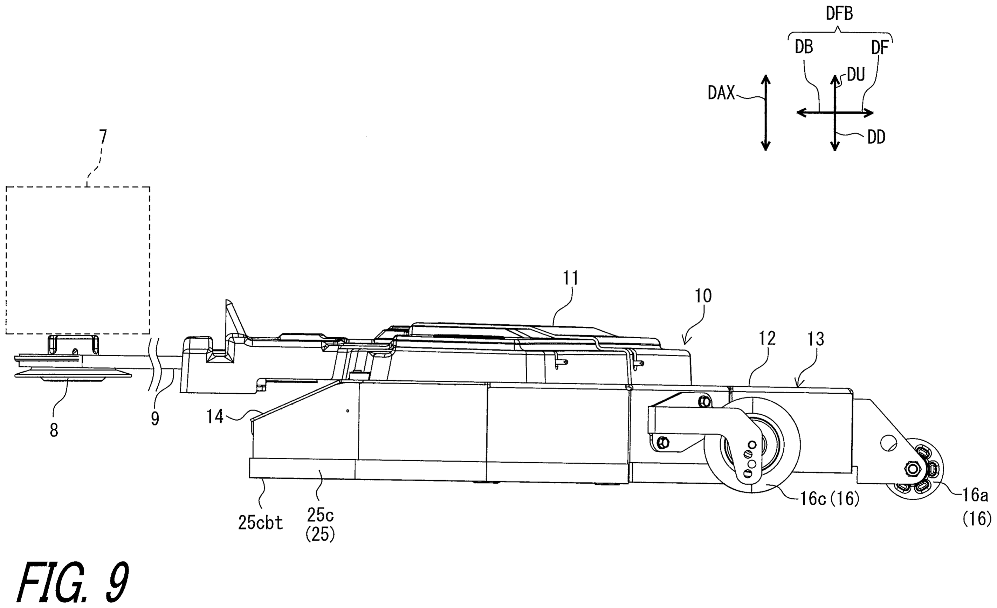

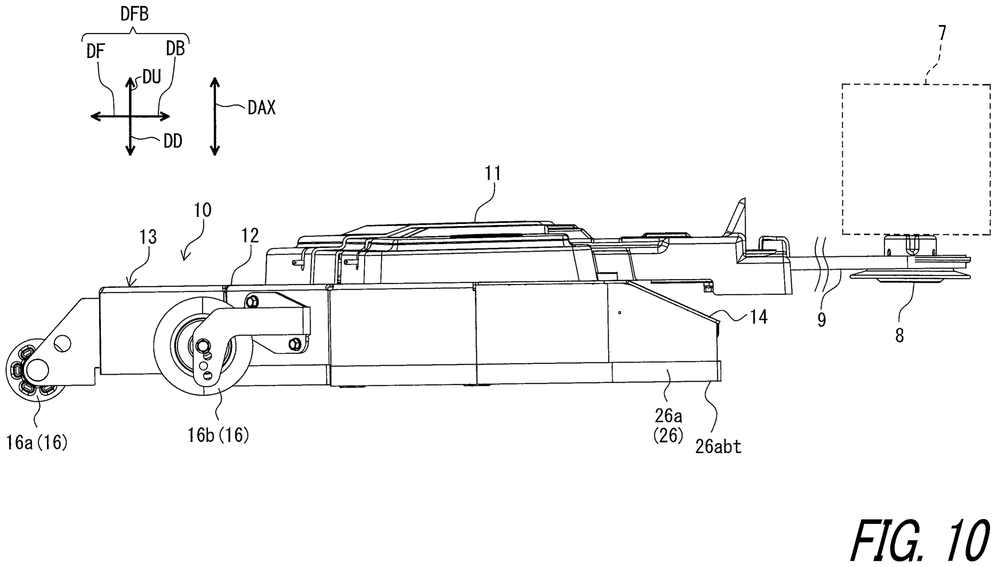

FIG. 9 illustrates a right-side view of the mower deck 10 is illustrated. FIG. 10 illustrates a left side view of the mower deck 10. As seen in FIGS. 9 and 10, the mower deck 10 includes a guide wall 14 slanted in the downward direction DD from the top wall 12. As seen in FIG. 9, the second additional peripheral baffle 25c extends from top wall 12 to a bottom 25cbt of the second additional peripheral baffle 25c in the axial direction DAX to cover the third cutting blade 50c when viewed in the leftward direction DSL. As seen in FIG. 9, the first additional peripheral baffle 26a extends from the top wall 12 to a bottom 26abt of the first additional peripheral baffle 26a to cover the second cutting blade 50a when viewed in the rightward direction DSR.

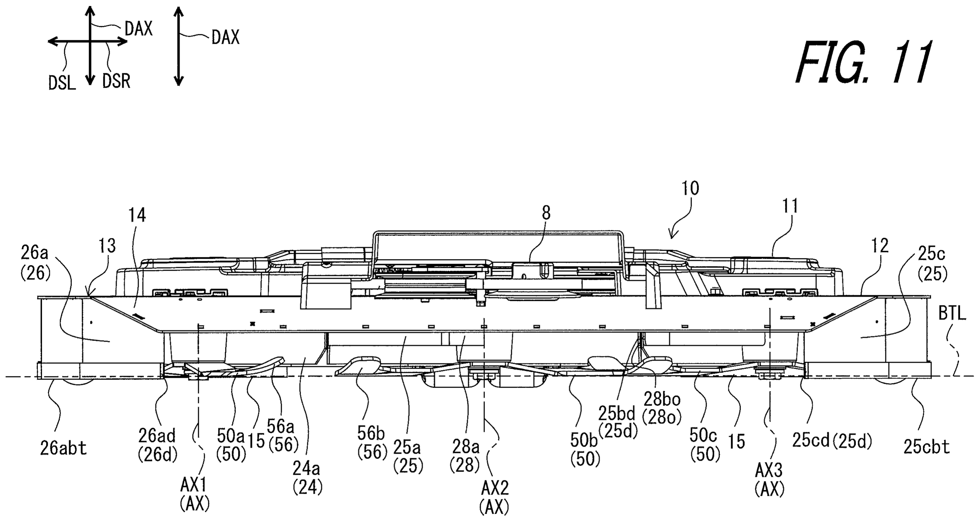

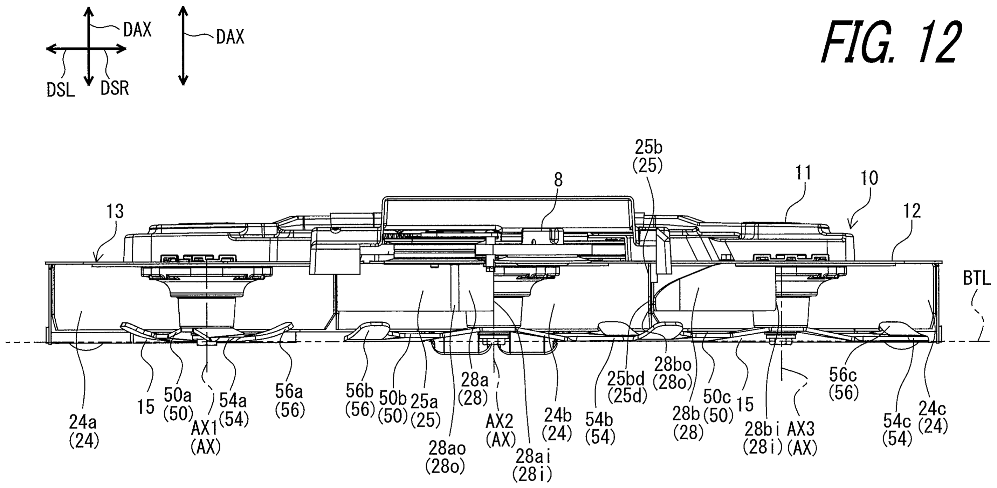

FIG. 11 illustrates a rear view of the mower deck 10. FIG. 12 illustrates a rear view of the mower deck 10 with the second additional peripheral baffle 25c, the first additional peripheral baffle 26a, and the guide wall 14 removed. FIGS. 11 and 12 depict a bottom line BTL of the cutting blades 50. As seen in FIGS. 11 and 12, the guide baffle 25 is provided between the top wall 12 and the cutting blade 50 in the axial direction DAX. More specifically, the first guide baffle 25b is provided between the top wall 12 and the third cutting blade 50c in the axial direction DAX. The second guide baffle 25a is provided between the top wall 12 and the first cutting blade 50b in the axial direction DAX.

However, as shown in FIG. 11, the second additional peripheral baffle 25c is wider than the first guide baffle 25b (e.g., the distal end 25bd of the first guide baffle 25b in FIG. 10) in the axial direction DAX such that the third cutting blade 50c is provided between the top wall 12 and the bottom 25cbt of the second additional peripheral baffle 25c in the axial direction DAX. The first additional peripheral baffle 26a is wider than the first guide baffle 25b in the axial direction DAX such that the second cutting blade 50a is provided between the top wall 12 and a bottom 26abt of the first additional peripheral baffle 26a in the axial direction DAX. This structure reduces an amount of the grass clippings to be discharged in the leftward direction DSL and the rightward direction DSR.

As shown in FIG. 12, Each of the first peripheral baffle 20b, the second peripheral baffle 20a, and the third peripheral baffle 20c can be collectively referred to as an arc section 24. The arc section 24 is wider than the guide baffle 25 (more specifically, the first guide baffle 25b, the second guide baffle 25a) in the axial direction DAX along the rotational axis AX such that at least part of the cutting blade 50 overlaps with the arc section 24 when viewed in a radial direction with respect to the rotational axis AX. This structure makes the arc section 24 to effectively guide the grass clippings toward the discharge opening 23. As shown in FIGS. 4, 6, 7, 11, and 12, the mower deck 10 includes a front wide wall 15 covering a front-left side of the second peripheral baffle 20a and a front-right side of the third peripheral baffle 20c. The front wide wall 15 is wider than the second peripheral baffle 20a in the axial direction DAX such that the second cutting blade 50a is provided between the top wall 12 and a bottom of the front wide wall 15. The front wide wall 15 is wider than the third peripheral baffle 20c in the axial direction DAX such that the third cutting blade 50c is provided between the top wall 12 and a bottom 25cbt of the front wide wall 15. This structure also reduces an amount of the grass clippings to be discharged in the leftward direction DSL and the rightward direction DSR.

Furthermore, as seen in FIGS. 7 and 12, a gap between the guard baffle 28 and the cutting blade 50 along the rotational axis AX is so small that a negative pressure is generated in the cutting area 29 opposite to an outlet (e.g. the discharge opening 23) with respect to the guard baffle 28, the outlet being defined between the guide baffle 25 and the guard baffle 28. Accordingly, the grass tends to be directed in the upward direction DU and thus, it facilitates cutting the grass by the cutting blades 50.

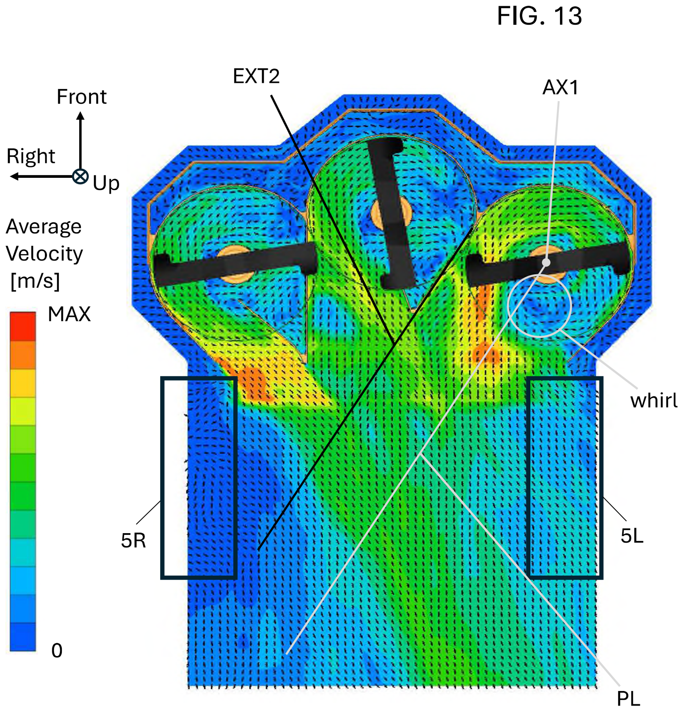

FIG. 13 shows a simulation result calculating the grass clippings flows. As shown in FIG. 13, a whirl is generated adjacent to the parallel line PL due to the rotation of the second cutting blade 50a. The parallel line PL is parallel to the first guide baffle 25b and the extended line EXT2. Accordingly, it is possible to keep the grass clippings from re-entering the cutting area 29 in which the grass is usually cut by the cutting blade 50, even though the guard baffle 28 is omitted in the second cutting chamber 22a. In the second cutting chamber 22a, the cutting area 29 is located next to the whirl in the rotational direction DRT. The parallel line PL is provided in front of the rear wheel 5L, and the parallel line PL does not cross the rear wheel 5R. This structure reduces an amount of the grass clippings discharged from the first cutting chamber 22b and trodden by the rear wheels 5L and 5R.

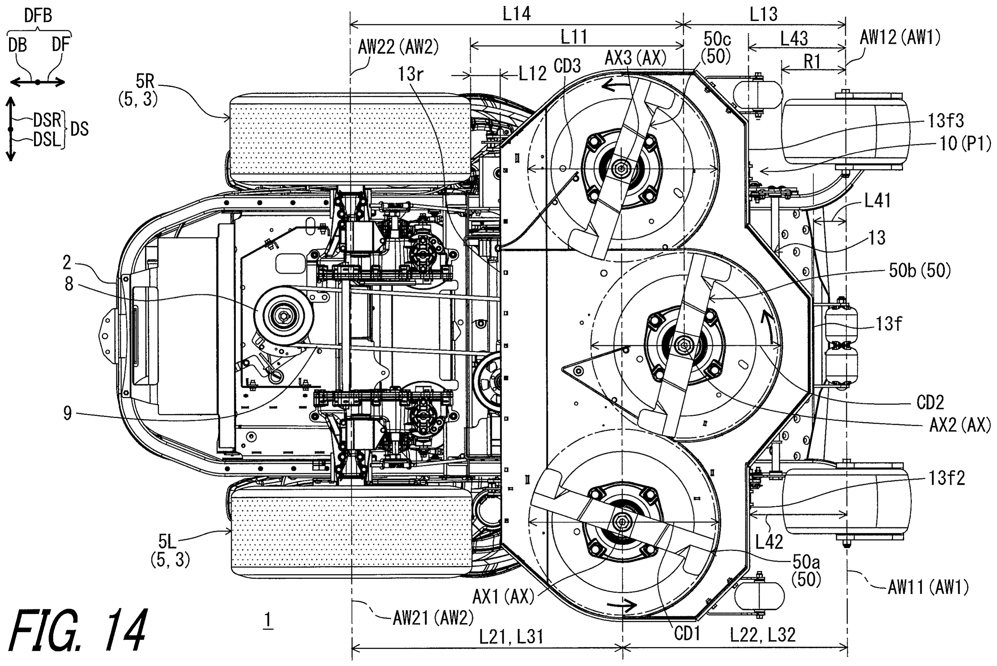

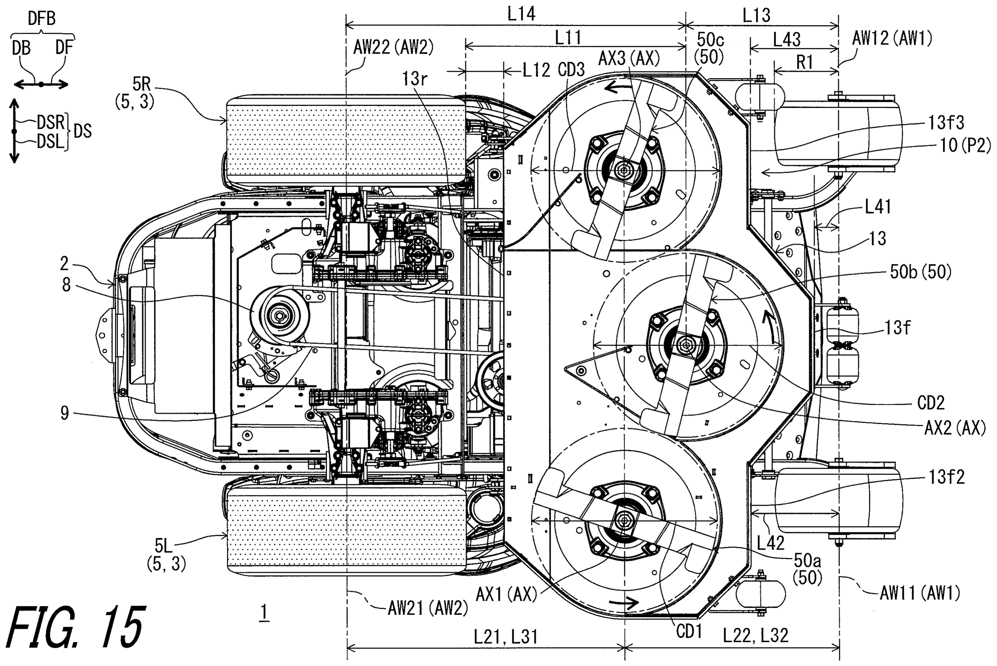

FIG. 14 is the bottom view of the rear-discharge mower 1 in the upper-position state where the mower deck 10 is in the upper position P1. FIG. 15 is the bottom view of the rear-discharge mower 1 in the lower-position state where the mower deck 10 is in the lower position P2.

As shown in FIG. 14 or 15, a first rear distance L11 is defined between the first rotational axis AX2 and the rear wheel 5L or 5R in the front-rear direction DFB of the rear-discharge mower 1 when viewed in the axial direction DAX defined along the first rotational axis AX2. The front-rear direction DFB is defined perpendicularly to the rear-wheel rotational axis AW21 or AW22 when viewed in the axial direction DAX. The first cutting blade 50b defines the first cutting diameter CD2 having the first rotational axis AX2 as a rotational center. The second cutting blade 50a defines the second cutting diameter CD1 having the second rotational axis AX1 as a rotational center. The third cutting blade 50c defines the third cutting diameter CD3 having the third rotational axis AX3 as a rotational center. The first rear distance L11 is greater than or equal to the first cutting diameter CD2. The first rear distance L11 is greater than or equal to the second cutting diameter CD1. The first rear distance L11 is greater than or equal to the third cutting diameter CD3.

As seen in FIG. 14, the first rear distance L11 is greater than the first cutting diameter CD2 in the upper-position state where the mower deck 10 is in the upper position P1. As seen in FIG. 15, the first rear distance L11 is greater than the first cutting diameter CD2 in the lower-position state where the mower deck 10 is in the lower position P2. Namely, as seen in FIGS. 14 and 15, the first rear distance L11 is greater than the first cutting diameter CD2 in each of the lower-position state and the upper-position state. Alternatively, the first rear distance L11 can be greater than the first cutting diameter CD2 in only one of the lower-position state and the upper-position state. For example, the first rear distance L11 in the lower-position state (FIG. 15) is greater than the first rear distance L11 in the upper-position state (FIG. 14). Thus, the first rear distance L11 can be less than or equal to the first cutting diameter CD2 in the upper-position state while the first rear distance L11 is greater than the first cutting diameter CD2 in the lower-position state. The first rear distance L11 can be less than or equal to the first cutting diameter CD2 in each of the upper-position state and the lower-position state.

As seen in FIG. 14, the first rear distance L11 is greater than the second cutting diameter CD1 in the upper-position state where the mower deck 10 is in the upper position P1. As seen in FIG. 15, the first rear distance L11 is greater than the second cutting diameter CD1 in the lower-position state where the mower deck 10 is in the lower position P2. Namely, as seen in FIGS. 14 and 15, the first rear distance L11 is greater than the second cutting diameter CD1 in each of the lower-position state and the upper-position state. Alternatively, the first rear distance L11 can be greater than the second cutting diameter CD1 in only one of the lower-position state and the upper-position state. For example, the first rear distance L11 in the lower-position state (FIG. 15) is greater than the first rear distance L11 in the upper-position state (FIG. 14). Thus, the first rear distance L11 can be less than or equal to the second cutting diameter CD1 in the upper-position state while the first rear distance L11 is greater than the second cutting diameter CD1 in the lower-position state. The first rear distance L11 can be less than or equal to the second cutting diameter CD1 in each of the upper-position state and the lower-position state.

As seen in FIG. 14, the first rear distance L11 is greater than the third cutting diameter CD3 in the upper-position state where the mower deck 10 is in the upper position P1. As seen in FIG. 15, the first rear distance L11 is greater than the third cutting diameter CD3 in the lower-position state where the mower deck 10 is in the lower position P2. Namely, as seen in FIGS. 14 and 15, the first rear distance L11 is greater than the third cutting diameter CD3 in each of the lower-position state and the upper-position state. Alternatively, the first rear distance L11 can be greater than the third cutting diameter CD3 in only one of the lower-position state and the upper-position state. For example, the first rear distance L11 in the lower-position state (FIG. 15) is greater than the first rear distance L11 in the upper-position state (FIG. 14). Thus, the first rear distance L11 can be less than or equal to the third cutting diameter CD3 in the upper-position state while the first rear distance L11 is greater than the third cutting diameter CD3 in the lower-position state. The first rear distance L11 can be less than or equal to the third cutting diameter CD3 in each of the upper-position state and the lower-position state.

As seen in FIG. 14 or 15, a second distance L21 is defined between the second rotational axis AX1 and the rear-wheel rotational axis AW21 or AW22 in the front-rear direction DFB when viewed in the axial direction DAX. A second additional distance L22 is defined between the second rotational axis AX1 and the front-wheel rotational axis AW11 or AW12 in the front-rear direction DFB when viewed in the axial direction DAX in a reference state where the front-wheel rotational axis AW11 or AW12 is parallel to the rear-wheel rotational axis AW21 or AW22. The second distance L21 is greater than the second additional distance L22.

As seen in FIG. 14, the second distance L21 is greater than the second additional distance L22 in the upper-position state. As seen in FIG. 15, the second distance L21 is greater than the second additional distance L22 in the lower-position state. Namely, as seen in FIGS. 14 and 15, the second distance L21 is greater than the second additional distance L22 in each of the lower-position state and the upper-position state. Alternatively, the second distance L21 can be greater than the second additional distance L22 in only one of the lower-position state and the upper-position state. For example, the second distance L21 in the lower-position state (FIG. 15) is greater than the second distance L21 in the upper-position state (FIG. 14). Thus, the second distance L21 can be less than or equal to the second additional distance L22 in the upper-position state while the second distance L21 is greater than the second additional distance L22 in the lower-position state. The second distance L21 can be less than or equal to the second additional distance L22 in each of the upper-position state and the lower-position state.

As seen in FIG. 14 or 15, a third distance L31 is defined between the third rotational axis AX3 and the rear-wheel rotational axis AW21 or AW22 in the front-rear direction DFB when viewed in the axial direction DAX. A third additional distance L32 is defined between the third rotational axis AX3 and the front-wheel rotational axis AW11 or AW12 in the front-rear direction DFB when viewed in the axial direction DAX in the reference state where the front-wheel rotational axis AW11 or AW12 is parallel to the rear-wheel rotational axis AW21 or AW22. The third distance L31 is greater than the third additional distance L32.

As seen in FIG. 14, the third distance L31 is greater than the third additional distance L32 in the upper-position state. As seen in FIG. 15, the third distance L31 is greater than the third additional distance L32 in the lower-position state. Namely, as seen in FIGS. 14 and 15, the third distance L31 is greater than the third additional distance L32 in each of the lower-position state and the upper-position state. Alternatively, the third distance L31 can be greater than the third additional distance L32 in only one of the lower-position state and the upper-position state. For example, the third distance L31 in the lower-position state (FIG. 15) is greater than the third distance L31 in the upper-position state (FIG. 14). Thus, the third distance L31 can be less than or equal to the third additional distance L32 in the upper-position state while the third distance L31 can be greater than the third additional distance L32 in the lower-position state. The third distance L31 can be less than or equal to the third additional distance L32 in each of the upper-position state and the lower-position state.

As seen in FIG. 14 or 15, the deck frame 13 includes a rear deck end 13r. The rear deck end 13r is the closest to the rear wheel 5L or 5R in the deck frame 13 in the front-rear direction DFB. The rear deck end 13r is a rear part of the deck frame 13 and at least partially defines the discharge opening 23. An additional rear distance L12 is defined between the rear deck end 13r and the rear wheel 5L or 5R in the front-rear direction DFB when viewed in the axial direction DAX. The additional rear distance L12 is less than a half of the first cutting diameter CD2. The additional rear distance L12 is less than a half of the second cutting diameter CD1. The additional rear distance L12 is less than a half of the third cutting diameter CD3.

As seen in FIG. 14, the additional rear distance L12 is less than the half of the first cutting diameter CD2 in the upper-position state. The additional rear distance L12 is less than the half of the second cutting diameter CD1 in the upper-position state. The additional rear distance L12 is less than the half of the third cutting diameter CD3 in the upper-position state. As seen in FIG. 15, the additional rear distance L12 is less than the half of the first cutting diameter CD2 in the lower-position state. The additional rear distance L12 is less than the half of the second cutting diameter CD1 in the lower-position state. The additional rear distance L12 is less than the half of the third cutting diameter CD3 in the lower-position state.

Alternatively, the additional rear distance L12 can be less than the half of the first cutting diameter CD2 in only one of the upper-position state and the lower-position state. The additional rear distance L12 can be less than the half of the second cutting diameter CD1 in only one of the upper-position state and the lower-position state. The additional rear distance L12 can be less than the half of the third cutting diameter CD3 in only one of the upper-position state and the lower-position state. For example, the additional rear distance L12 in the lower-position state (FIG. 15) is greater than the additional rear distance L12 in the upper-position state (FIG. 14). Thus, the additional rear distance L12 can be greater than or equal to the half of the first cutting diameter CD2 in the upper-position state while the additional rear distance L12 is less than the half of the first cutting diameter CD2 in the lower-position state. The additional rear distance L12 can be greater than or equal to the half of the second cutting diameter CD1 in the upper-position state while the additional rear distance L12 is less than the half of the second cutting diameter CD1 in the lower-position state. The additional rear distance L12 can be greater than or equal to the half of the third cutting diameter CD3 in the upper-position state while the additional rear distance L12 is less than the half of the third cutting diameter CD3 in the lower-position state. Furthermore, the additional rear distance L12 can be greater than or equal to the half of the first cutting diameter CD2 in each of the upper-position state and the lower-position state. The additional rear distance L12 can be greater than or equal to the half of the second cutting diameter CD1 in each of the upper-position state and the lower-position state. The additional rear distance L12 can be greater than or equal to the half of the third cutting diameter CD3 in each of the upper-position state and the lower-position state.

As seen in FIG. 14 or 15, a first front distance L13 is defined between the first rotational axis AX2 and the front-wheel rotational axis AW11 or AW12 in the front-rear direction DFB when viewed in the axial direction DAX in the reference state where the front-wheel rotational axis AW11 or AW12 is parallel to the rear-wheel rotational axis AW21 or AW22. The first front distance L13 is less than or equal to the first cutting diameter CD2.

As seen in FIG. 14, the first front distance L13 is less than or equal to the first cutting diameter CD2 in the upper-position state. As seen in FIG. 15, the first front distance L13 is less than or equal to the first cutting diameter CD2 in the lower-position state. Alternatively, the first front distance L13 can be less than or equal to the first cutting diameter CD2 in only one of the lower-position state and the upper-position state. For example, the first front distance L13 in the lower-position state (FIG. 15) is less than or equal to the first front distance L13 in the upper-position state (FIG. 14). Thus, the first front distance L13 can be greater than the first cutting diameter CD2 in the upper-position state while the first front distance L13 is less than or equal to the first cutting diameter CD2 in the lower-position state. The first front distance L13 can be greater than the first cutting diameter CD2 in each of the upper-position state and the lower-position state.

As seen in FIG. 14 or 15, a first distance L14 is defined between the first rotational axis AX2 and the rear-wheel rotational axis AW21 or AW22 in the front-rear direction DFB when viewed in the axial direction DAX. The first distance L14 is greater than the first front distance L13.

As seen in FIG. 14, the first distance L14 is greater than the first front distance L13 in the upper-position state. As seen in FIG. 15, the first distance L14 is greater than the first front distance L13 in the lower-position state. Alternatively, the first distance L14 can be greater than the first front distance L13 in only one of the lower-position state and the upper-position state. For example, the first distance L14 in the lower-position state (FIG. 15) is greater than the first distance L14 in the upper-position state (FIG. 14). Thus, the first distance L14 can be less than or equal to the first front distance L13 in the upper-position state while the first distance L14 is greater than the first front distance L13 in the lower-position state. The first distance L14 can be less than or equal to the first front distance L13 in each of the upper-position state and the lower-position state.

As seen in FIG. 14 or 15, the front wheel 4L or 4R has a front-wheel radius R1 or R2 defined from the front-wheel rotational axis AW11 or AW12. The deck frame 13 includes a front deck end 13f. The front deck end 13f is a front end of the deck frame 13. The front deck end 13f can also be referred to as a front-side wall 13f. Namely, the deck frame 13 includes the front-side wall 13f. A first minimum distance L41 is defined between the front-wheel rotational axis AW11 or AW12 and the front deck end 13f in the front-rear direction DFB when viewed in the axial direction DAX in the reference state where the front-wheel rotational axis AW11 or AW12 is parallel to the rear-wheel rotational axis AW21 or AW22. The first minimum distance L41 is less than the front-wheel radius R1.

As seen in FIG. 14, the first minimum distance L41 is less than the front-wheel radius R1 in the upper-position state. As seen in FIG. 15, the first minimum distance L41 is less than the front-wheel radius R1 in the lower-position state. Alternatively, the first minimum distance L41 can be less than the front-wheel radius R1 in only one of the lower-position state and the upper-position state. For example, the first minimum distance L41 in the lower-position state (FIG. 15) is less than the first minimum distance L41 in the upper-position state (FIG. 14). Thus, the first minimum distance L41 can be greater than the front-wheel radius R1 in the upper-position state while the first minimum distance L41 is less than the front-wheel radius R1 in the lower-position state. The first minimum distance L41 can be greater than the front-wheel radius R1 in each of the upper-position state and the lower-position state.

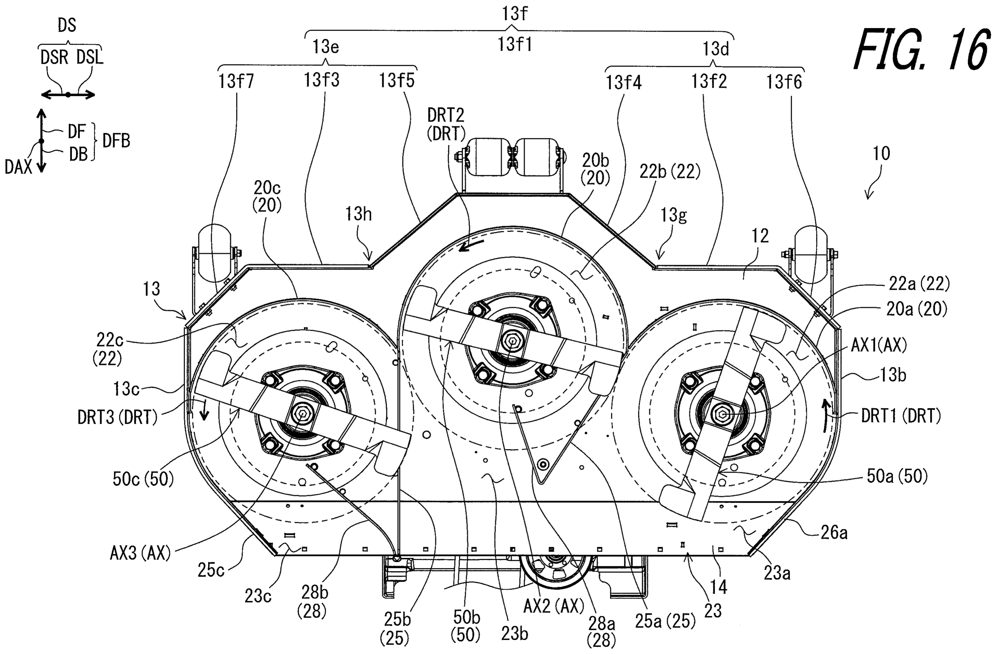

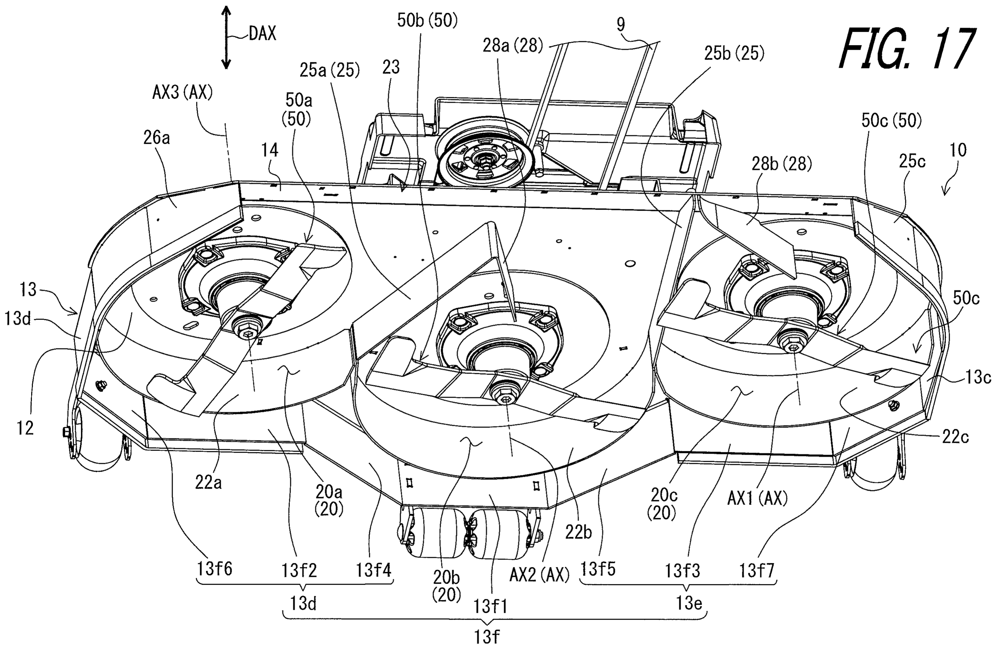

As seen in FIGS. 16 and 17. the deck frame 13 includes a left-side wall 13b and a right-side wall 13c. The first front deck end 13f1 is provided between the left-side wall 13b and the right-side wall 13c in the left-right direction DS.

The front-side wall 13f includes a first front deck end 13f1, a first front coupling portion 13d, and a second front coupling portion 13e. The first front coupling portion 13d includes a second front deck end 13f2 and a fourth front deck end 13f4. The second front coupling portion 13e includes a third front deck end 13f3 and a fifth front deck end 13f5. Namely, the front deck end 13f includes the first front deck end 13f1, the second front deck end 13f2, the third front deck end 13f3, the fourth front deck end 13f4, and the fifth front deck end 13f5. Each of the first front deck end 13f1, the second front deck end 13f2, the third front deck end 13f3, the fourth front deck end 13f4, and the fifth front deck end 13f5 has a plate shape.

The first front coupling portion 13d is provided between the first front deck end 13f1 and the left-side wall 13b in the front-rear direction DFB and couples the first front deck end 13f1 and the left-side wall 13b. The second front coupling portion 13e is provided between the third front deck end 13f3 and the right-side wall 13c in the front-rear direction DFB and couples the first front deck end 13f1 and the right-side wall 13c.

The first front deck end 13f1 is provided between the second front deck end 13f2 and the third front deck end 13f3 in the left-right direction DS of the rear-discharge mower 1. The fourth front deck end 13f4 extends from the first front deck end 13f1 to the second front deck end 13f2 and couples the first front deck end 13f1 and the second front deck end 13f2. The fifth front deck end 13f5 extends from the first front deck end 13f1 to the third front deck end 13f3 and couples the first front deck end 13f1 and the third front deck end 13f3. The first front deck end 13f1 is provided more forward than the second front deck end 13f2 and the third front deck end 13f3 in the front-rear direction DFB. The fourth front deck end 13f4 is inclined relative to the front-rear direction DFB when viewed in the axial direction DAX. The fifth front deck end 13f5 is inclined relative to the front-rear direction DFB when viewed in the axial direction DAX.

The first front coupling portion 13d includes a sixth front deck end 13f6. The sixth front deck end 13f6 is provided between the second front deck end 13f2 and the left-side wall 13b and couples the second front deck end 13f2 and the left-side wall 13b. The sixth front deck end 13f6 has a plate shape. The sixth front deck end 13f6 is inclined relative to the front-rear direction DFB when viewed in the axial direction DAX.

The second front coupling portion 13e includes a seventh front deck end 13f7. The seventh front deck end 13f7 is provided between the second front deck end 13f3 and the right-side wall 13c and couples the second front deck end 13f3 and the right-side wall 13c. The seventh front deck end 13f7 has a plate shape. The seventh front deck end 13f7 is inclined relative to the front-rear direction DFB when viewed in the axial direction DAX.

The left-side wall 13b protrudes from the top wall 12 in the axial direction DAX defined along the rotational axis AX. The right-side wall 13c protrudes from the top wall 12 in the axial direction DAX. The right-side wall 13c is spaced apart from the left-side wall 13b. The cutting blade 50 is provided between the left-side wall 13b and the right-side wall 13c in the left-right direction DS of the rear-discharge mower 1 when viewed in the axial direction DAX. The front-side wall 13f couples the left-side wall 13b and the right-side wall 13c and extends between the left-side wall 13b and the right-side wall 13c.

The second front deck end 13f2 and the fourth front deck end 13f4 define a first recess 13g provided outside the cutting chamber 22. The third front deck end 13f3 and the fifth front deck end 13f5 define a second recess 13h provided outside the cutting chamber 22. The first recess 13g can also be referred to as a recess 13g. The second recess 13h can also be referred to as a recess 13h. At least one of the first front coupling portion 13d and the second front coupling portion 13e includes the recess 13g and/or 13h. In the present embodiment, the first front coupling portion 13d includes the recess 13g. The second front coupling portion 13e includes the recess 13h. The recess 13g is configured to avoid interference between the front wheel 4L and the deck frame 13. The recess 13h is configured to ensure a space between the front wheel 4R and the deck frame 13. Only one of the first front coupling portion 13d and the second front coupling portion 13e can include the recess 13g or 13h.

As seen in FIG. 14 or 15, a second minimum distance L42 is defined between the front-wheel rotational axis AW11 or AW12 and the second front deck end 13f2 in the front-rear direction DFB when viewed in the axial direction DAX in the reference state. A third minimum distance L43 is defined between the front-wheel rotational axis AW11 or AW12 and the third front deck end 13f3 in the front-rear direction DFB when viewed in the axial direction DAX in the reference state. The first minimum distance L41 is less than the second minimum distance L42 and the third minimum distance L43. Alternatively, the first minimum distance L41 can be greater than or equal to at least one of the second minimum distance L42 and the third minimum distance L43.

### <Modification of the mower drive belt tensioner>

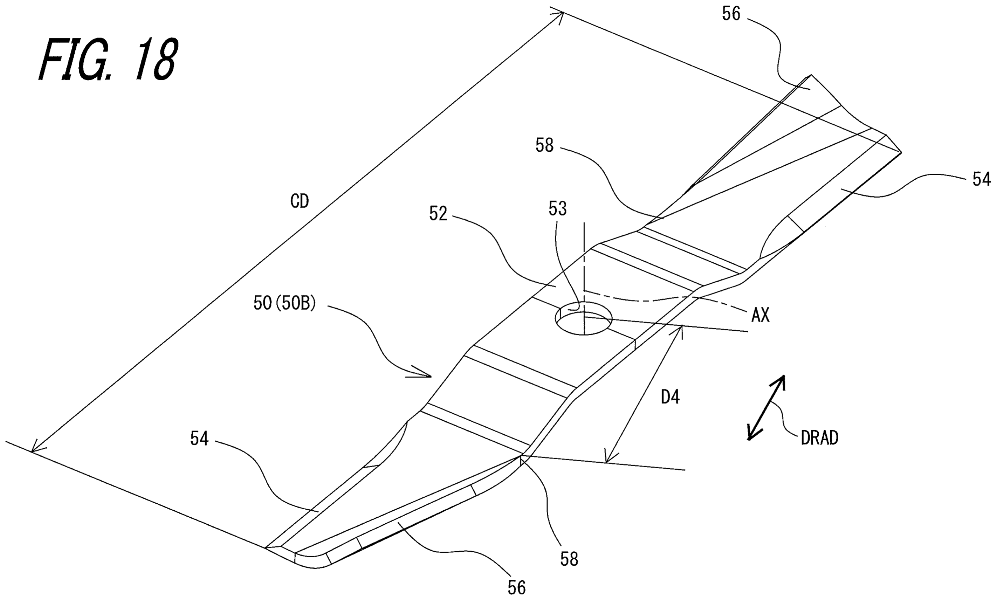

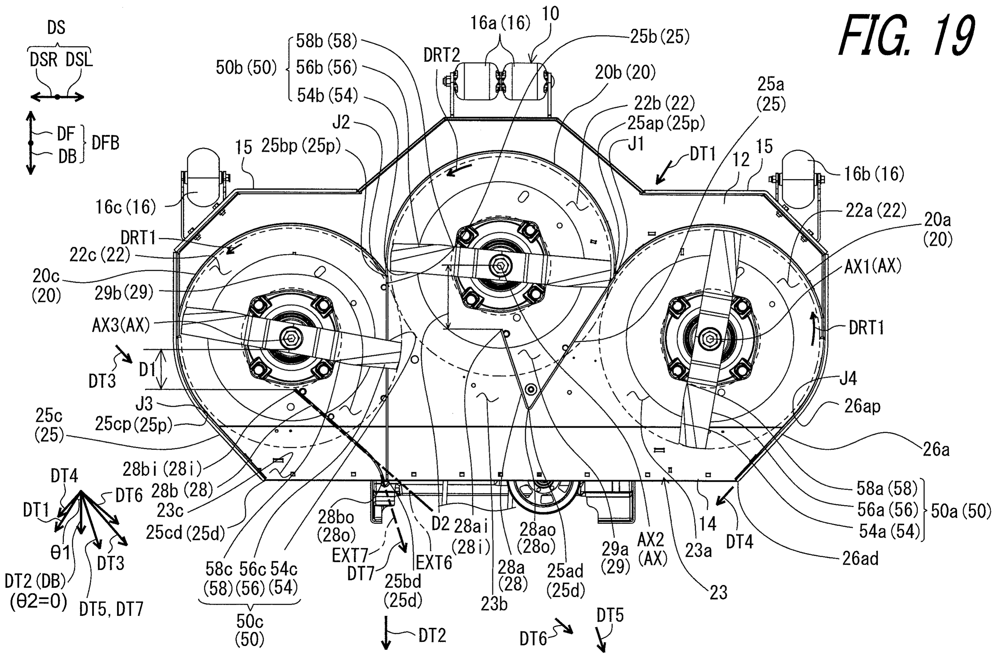

The mower deck 10 may use different types of cutting blades 50. FIG. 18 shows a perspective view of another type (50B) of the cutting blade 50. FIG. 19 shows an enlarged bottom view of the mower deck 10 using another type (50B) of the cutting blade 50. As shown in FIGS. 8 and 14, the type 50B of the cutting blade 50 is different from the type 50A of the cutting blade 50 in a shape of the lifts 56 and a distance the rotational axis AX and the inner end 58 of the lift 56 of the cutting blade 50 in a radial direction DRAD with respect to the rotational axis AX. The type 50B of the cutting blade has a distance D4 the rotational axis AX and the inner end 58 of the lift 56 of the cutting blade 50 in a radial direction DRAD with respect to the rotational axis AX.

In FIG. 19, a dotted line depicted around the second rotational axis AX1 shows a circular trajectory along which the inner ends 58 of the lifts 56 of the second cutting blade 50a (the type 50B) pass. A dotted line depicted around the first rotational axis AX2 shows a circular trajectory along which the inner ends 58 of the lifts 56 of the first cutting blade 50b (the type 50B) pass. A dotted line depicted around the third rotational axis AX3 shows a circular trajectory along which the inner ends 58 of the lifts 56 of the third cutting blade 50c (the type 50B) pass. Accordingly, a radius of the circular trajectory shown in the dotted line is the distance D4.

As shown in FIG. 19, the distance D1 between the third rotational axis AX3 and the second inner baffle end 28bi is almost equal to the distance D4. The distance D2 between the first rotational axis AX2 and the first inner baffle end 28ai is larger than the distance D4. It is more effective to keep the grass clippings from re-entering the cutting area 29 when the type 50A of the cutting blade 50 is used than when the type 50B of the cutting blade 50 is used. However, it is also effective to keep the grass clippings from re-entering the cutting area 29 even when the type 50B of the cutting blade 50 is used.

In the above embodiment and modification, the rotational direction DRT is anticlockwise when the bottom view of the mower deck 10 is seen. However, the rotational direction DRT may be clockwise when the bottom view of the mower deck 10 is seen. In such case, the second peripheral baffle 20a (the second cutting chamber 22a) is in front of the rear wheel 5R and the third peripheral baffle 20c (the third cutting chamber 22c) is in front of the rear wheel 5L.

In the above embodiments and modifications, as seen in FIG. 14 or 15, the first distance L14 is greater than the second distance L21 and the third distance L31. Alternatively, the first distance L14 can be less than or equal to at least one of the second distance L21 and the third distance L31.

In the above embodiments and modifications, the first cutting diameter CD2, the second cutting diameter CD1, and the third cutting diameter CD3 are equal. Alternatively, at least one of the first cutting diameter CD2, the second cutting diameter CD1, and the third cutting diameter CD3 can be different from another of the first cutting diameter CD2, the second cutting diameter CD1, and the third cutting diameter CD3.

In the above embodiments and modifications, the mower deck 10 includes the first cutting blade 50b, the second cutting blade 50a, and the third cutting blade 50c. Alternatively, the mower deck 10 may include at least one cutting blade 50. At least one of the second cutting blade 50a and the third cutting blade 50c can be omitted from the mower deck 10.

In the above embodiments and modifications, the first rotational axis AX2 is provided between the second rotational axis AX1 and the third rotational axis AX3 in the left-right direction DS. Alternatively, the second rotational axis AX1 can be provided between the first rotational axis AX2 and the third rotational axis AX3 in the left-right direction DS. The third rotational axis AX3 can be provided between the first rotational axis AX2 and the second rotational axis AX1 in the left-right direction DS.

In the present application, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. This concept also applies to words of similar meaning, for example, the terms "have," "include" and their derivatives.

Expressions "member", "part", "element", "body", and "structure" may have a plurality of meanings indicating a single portion and a plurality of portions.

Ordinal numbers "first", "second", and the like are terms for simple distinction among configurations, without having any other meaning (e.g. specific order). For example, provision of a "first element" does not indicate provision of a "second element", and provision of the "second element" does not indicate provision of the "first element".

Expressions "substantially", "approximately", "about", and the like indicating degrees may each have a rational deviation not significantly changing a final result. All the numerical values referred to in the present application may be interpreted as including any one of the expressions "substantially", "approximately", "about", and the like.

In the present application, an expression "at least one of A and B" is interpreted to encompass (1) only A, (2) only B, and (3) both A and B.

In view of the above disclosure, the present invention can obviously include various modifications and alterations. The present invention may thus be implemented in any manner different from those specifically disclosed in the present application without departing from the spirit of the preset invention.

## Claims

1. A rear-discharge mower (1) comprising:
a vehicle body (2);
a front wheel (4) coupled to the vehicle body (2) rotatably about a front-wheel rotational axis (AW1);
a rear wheel (5) coupled to the vehicle body (2) rotatably about a rear-wheel rotational axis (AW2);
a mower deck (10) comprising:
a deck frame (13) coupled to the vehicle body (2); and
a first cutting blade (50b) coupled to the deck frame (13) rotatably about a first rotational axis (AX2);
a first rear distance (L11) defined between the first rotational axis (AX2) and the rear wheel (5) in a front-rear direction (DFB) of the rear-discharge mower (1) when viewed in an axial direction (DAX) defined along the first rotational axis (AX2), the front-rear direction (DFB) being defined perpendicularly to the rear-wheel rotational axis (AW2) when viewed in the axial direction (DAX);
the first cutting blade (50b) defining a first cutting diameter (CD2) having the first rotational axis (AX2) as a rotational center; and
the first rear distance (L11) being greater than or equal to the first cutting diameter (CD2).

2. The rear-discharge mower (1) according to claim 1, wherein
the mower deck (10) comprises:
a second cutting blade (50a) coupled to the deck frame (13) rotatably about a second rotational axis (AX1); and
a third cutting blade (50c) coupled to the deck frame (13) rotatably about a third rotational axis (AX3), and
the first rotational axis (AX2) is provided between the second rotational axis (AX1) and the third rotational axis (AX3) in a left-right direction (DS) of the rear-discharge mower (1), the left-right direction (DS) being defined along the rear-wheel rotational axis (AW2).

3. The rear-discharge mower (1) according to claim 2, wherein
a second distance (L21) is defined between the second rotational axis (AX1) and the rear-wheel rotational axis (AW2) in the front-rear direction (DFB) when viewed in the axial direction (DAX),
a second additional distance (L22) is defined between the second rotational axis (AX1) and the front-wheel rotational axis (AW1) in the front-rear direction (DFB) when viewed in the axial direction (DAX) in a reference state where the front-wheel rotational axis (AW1) is parallel to the rear-wheel rotational axis (AW2), and
the second distance (L21) is greater than the second additional distance (L22).

4. The rear-discharge mower (1) according to any one of the preceding claims, wherein
the deck frame (13) includes a rear deck end (13r),
an additional rear distance (L12) is defined between the rear deck end (13r) and the rear wheel (5) in the front-rear direction (DFB) when viewed in the axial direction (DAX), and
the additional rear distance (L12) is less than a half of the first cutting diameter (CD2).

5. The rear-discharge mower (1) according to any one of the preceding claims, wherein
the mower deck (10) is movably coupled to the vehicle body (2) between a lower position (P2) and an upper position (P1), and
the first rear distance (L11) is greater than the first cutting diameter (CD2) in a lower-position state where the mower deck (10) is in the lower position (P2), and preferably also in an upper-position state where the mower deck (10) is in the upper position (P1).

6. The rear-discharge mower (1) according to any one of the preceding claims, wherein
the mower deck (10) is movably coupled to the vehicle body (2) between a lower position (P2) and an upper position (P1),
a first front distance (L13) is defined between the first rotational axis (AX2) and the front-wheel rotational axis (AW1) in the front-rear direction (DFB) when viewed in the axial direction (DAX) in a reference state where the front-wheel rotational axis (AW1) is parallel to the rear-wheel rotational axis (AW2), and
the first front distance (L13) is less than or equal to the first cutting diameter (CD2), preferably also in a lower-position state where the mower deck (10) is in the lower position (P2).

7. The rear-discharge mower (1) according to any one of the preceding claims, wherein
the mower deck (10) is movably coupled to the vehicle body (2) between a lower position (P2) and an upper position (P1),
the front wheel (4) has a front-wheel radius (R1) defined from the front-wheel rotational axis (AW1),
the deck frame (13) includes a front deck end (13f),
a first minimum distance (L41) is defined between the front-wheel rotational axis (AW1) and the front deck end (13f) in the front-rear direction (DFB) when viewed in the axial direction (DAX) in a reference state where the front-wheel rotational axis (AW1) is parallel to the rear-wheel rotational axis (AW2), and
the first minimum distance (L41) is less than the front-wheel radius (R1), preferably also in a lower-position state where the mower deck (10) is in the lower position (P2).

8. The rear-discharge mower (1) according to claim 7, wherein
the front deck end (13f) includes a first front deck end (13f1), a second front deck end (13f2), and a third front deck end (13f3),
the first front deck end (13f1) is provided between the second front deck end (13f2) and the third front deck end (13f3) in a left-right direction (DS) of the rear-discharge mower (1), the left-right direction (DS) being defined along the rear-wheel rotational axis (AW2),
the first minimum distance (L41) is defined between the front-wheel rotational axis (AW1) and the first front deck end (13f1) in the front-rear direction (DFB) when viewed in the axial direction (DAX) in the reference state,
a second minimum distance (L42) is defined between the front-wheel rotational axis (AW1) and the second front deck end (13f2) in the front-rear direction (DFB) when viewed in the axial direction (DAX) in the reference state,
a third minimum distance (L43) is defined between the front-wheel rotational axis (AW1) and the third front deck end (13f3) in the front-rear direction (DFB) when viewed in the axial direction (DAX) in the reference state, and
the first minimum distance (L41) is less than the second minimum distance (L42) and the third minimum distance (L43).

9. The rear-discharge mower (1) according to claim 8, wherein
the front deck end (13f) includes a fourth front deck end (13f4) and a fifth front deck end (13f5),
the fourth front deck end (13f4) extends from the first front deck end (13f1) to the second front deck end (13f2) and couples the first front deck end (13f1) and the second front deck end (13f2),
the fifth front deck end (13f5) extends from the first front deck end (13f1) to the third front deck end (13f3) and couples the first front deck end (13f1) and the third front deck end (13f3), and
preferably wherein the fourth front deck end (13f4) and the fifth front deck end (13f5) are inclined relative to the front-rear direction (DFB) when viewed in the axial direction (DAX).

10. The rear-discharge mower (1) according to claim 9, wherein
the deck frame (13) includes a cutting chamber (22),
the first rotational axis (AX2) is provided in the cutting chamber (22) when viewed in the axial direction (DAX),
the second front deck end (13f2) and the fourth front deck end (13f4) define a first recess (13g) provided outside the cutting chamber (22), and
the third front deck end (13f3) and the fifth front deck end (13f5) define a second recess (13h) provided outside the cutting chamber (22).

11. The rear-discharge mower (1) according to any one of the preceding claims, wherein
the deck frame (13) comprises:
a cutting chamber (22) in which the first rotational axis (AX2) is provided when viewed in the axial direction (DAX);
a discharge opening (23) connected to the cutting chamber (22);
a top wall (12) to which the first cutting blade (50b) is rotatably coupled;
a peripheral baffle (20) protruding from the top wall (12) in the axial direction (DAX), the top wall (12) and the peripheral baffle (20) defining the cutting chamber (22) and the discharge opening (23); and
a first guide baffle (25b) protruding from the top wall (12) in the axial direction (DAX), the first guide baffle (25b) being provided in the cutting chamber (22) and extending linearly from the peripheral baffle (20) toward the discharge opening (23) to guide grass clippings from the first cutting blade (50b) toward the discharge opening (23).

12. The rear-discharge mower (1) according to claim 11, when dependent on claim 2, wherein the mower deck (10) comprises a second guide baffle (25a) protruding from the top wall (12) in the axial direction (DAX), the second guide baffle (25a) being provided in the cutting chamber (22) and extending linearly from the peripheral baffle (20) toward the discharge opening (23) to guide grass clippings from the second cutting blade (50a) toward the discharge opening (23).

13. The rear-discharge mower (1) according to claim 11 or 12, wherein
the mower deck (10) comprises a first guard baffle (28a) protruding from the top wall (12) in the axial direction (DAX), the first guard baffle (28a) being provided in the cutting chamber (22) and extending from the first guide baffle (25b) toward the first rotational axis (AX2).

14. The rear-discharge mower (1) according to claim 12, wherein
the mower deck (10) comprises:
a first guard baffle (28a) protruding from the top wall (12) in the axial direction (DAX), the first guard baffle (28a) being provided in the cutting chamber (22) and extending from the first guide baffle (25b) toward the first rotational axis (AX2); and
a second guard baffle (28b) protruding from the top wall (12) in the axial direction (DAX), the second guard baffle (28b) being provided in the cutting chamber (22) and extending from the second guide baffle (25a) toward the third rotational axis (AX3).

15. The rear-discharge mower (1) according to any one of the preceding claims, wherein the deck frame (13) comprises:
a top wall (12) to which a cutting blade (50) is rotatably coupled;
a left-side wall (13b) protruding from the top wall (12) in an axial direction (DAX) defined along a rotational axis (AX);
a right-side wall (13c) protruding from the top wall (12) in the axial direction (DAX), the right-side wall (13c) being spaced apart from the left-side wall (13b), the cutting blade (50) being provided between the left-side wall (13b) and the right-side wall (13c) in a left-right direction (DS) of the rear-discharge mower (1) when viewed in the axial direction (DAX); and
a front-side wall (13f) protruding from the top wall (12) in the axial direction (DAX), the front-side wall (13f) coupling the left-side wall (13b) and the right-side wall (13c) and extending between the left-side wall (13b) and the right-side wall (13c), and
the front-side wall (13f) comprises:
a first front deck end (13f1) provided between the left-side wall (13b) and the right-side wall (13c) in the left-right direction (DS);
a first front coupling portion (13d) provided between the first front deck end (13f1) and the left-side wall (13b) in the left-right direction (DS) and coupling the first front deck end (13f1) and the left-side wall (13b); and
a second front coupling portion (13e) provided between the third front deck end (13f3) and the right-side wall (13c) in the left-right direction (DS) and coupling the first front deck end (13f1) and the right-side wall (13c), and
at least one of the first front coupling portion (13d) and the second front coupling portion (13e) includes a recess (13g, 13h) configured to ensure a space between the front wheel (4) and the deck frame (13).
